# EUROPEAN PATENT APPLICATION

(11) **EP 2 927 268 A1**
(43) Date of publication of application: **07.10.2015**
(21) Application number: 13858590.6
(22) Date of filing: 13.11.2013
(51) Int. Cl.: C08J 7/02, C08J 3/22, C08J 7/00, C08K 3/00, C08K 5/14, C08K 5/54, C08K 9/04, C08L 101/00, G02B 6/44, H01B 3/00, H01B 3/30, H01B 7/295

(54) **PRODUCTION METHOD FOR MOULDED BODY USING HEAT-RESISTANT SILANE-CROSS-LINKABLE RESIN COMPOSITION**

(30) Priority: 30.11.2012 JP 2012263751
(71) Applicant: Furukawa Electric Co., Ltd., Chiyoda-ku Tokyo 100-8322 (JP)
(72) Inventor: NISHIGUCHI, Masaki, Tokyo 100-8322 (JP); MATSUMURA, Arifumi, Tokyo 100-8322 (JP)
(74) Representative: Forstmeyer, Dietmar
(86) International application number: PCT/JP2013/080669
(87) International publication number: WO 2014/084048

(57) **Abstract**

A method comprising a step (a) of preparing a silane master batch by melt-blending to 100 parts by mass of a resin composition (RC) containing a resin component (R); an organic peroxide (P) of from 0.01 to 0.6 parts by mass, an inorganic filler (F), containing a surface-treated inorganic filler (F_{T}) obtained by surface-treating a surface-untreated inorganic filler (F_{U}) with at least one kind of a fatty acid and a phosphoric acid ester of from 0.1 to 4.0% by mass with respect to the surface-untreated inorganic filler (F_{U}), of from 10 to 400 parts by mass, and an unsaturated group-containing silane coupling agent (S) of from 0.5 to 18.0 parts by mass with respect to 100 parts by mass of the surface-treated inorganic filler (F_{T}), at a temperature equal to or higher than the decomposition temperature of the organic peroxide (P); a heat-resistant silane crosslinkable resin composition and a heat-resistant silane crosslinked resin molded body produced by the method; and a heat-resistant product using the heat-resistant silane crosslinked resin molded body.

## Description

### TECHNICAL FIELD

The present invention relates to a heat-resistant silane crosslinkable resin composition and a method for producing the same, a heat-resistant silane crosslinked resin molded body and a method for producing the same, and a heat-resistant product using a heat-resistant silane crosslinked resin molded body. The present invention, in particular, relates to a heat-resistant silane crosslinked resin molded body excellent in flexibility, heat resistance, elongation properties and appearance and a method for producing the same, a heat-resistant silane crosslinkable resin composition capable of being formed into the heat-resistant silane crosslinked resin molded body and a method for producing the resin composition, and a heat-resistant product using a heat-resistant silane crosslinked resin molded body, such as an insulator or a sheath of an electric wire, obtained by a method for producing the heat-resistant silane crosslinked resin molded body.

### BACKGROUND ART

Insulated wires, cables, cords, optical fiber core wires, used inside or outside wiring for electric and electronic instruments, optical fiber cord and the like, are required to have various properties such as flame retardancy, heat resistance, and mechanical characteristics (for example, tensile properties and abrasion resistance). As the materials for these wiring materials are used resin compositions prepared by incorporating the inorganic filler such as magnesium hydroxide, aluminum hydroxide or calcium carbonate in large quantities.

In addition, the temperatures of the wiring materials used for electric or electronic instruments may rise to from 80 to 105°C, even to about 125°C, under continuous use, so that heat resistance is required in some applications. In such a case, high heat resistance is imparted to the wiring materials by applying a method for crosslinking a coating material by electron beam crosslinking or chemical crosslinking.

As a conventional method for crosslinking a polyolefin resin such as polyethylene (PE), there have been known an electron beam crosslinking method for crosslinking by irradiation of an electron beam, a chemical crosslinking method for crosslinking reaction by the decomposition of organic peroxides by applying heat after molding, and a silane crosslinking method. Among these crosslinking methods, because in most cases silane crosslinking methods do not require special facilities, they can therefore be used in a wide variety of fields.

The silane crosslinking method is a method for obtaining a crosslinked molded body, which is obtained by a grafting reaction of a silane coupling agent having an unsaturated group onto a polymer in the presence of organic peroxides to obtain a silane graft polymer, and then contacting the silane graft polymer with water in the presence of a silanol condensation reaction catalyst.

To give a concrete example, as a method for producing a halogen-free heat-resistant silane crosslinked resin, there is a method for melt-blending a silane master batch prepared by grafting a silane coupling agent having an unsaturated group onto a polyolefin resin, a heat-resistant master batch prepared by blending polyolefin resin and an inorganic filler, and a catalyst master batch containing a silanol condensation reaction catalyst.

In such a method, it is effective to use large quantities of inorganic fillers in order to impart high flame retardant properties and high heat resistance and to obtain excellent strength or abrasion resistance and reinforcing property. However, there is a case where it is difficult to perform uniform melt-blending with a single-screw extruder or a twin-screw extruder when using an inorganic filler at a proportion of more than 100 parts by mass with respect to 100 parts by mass of polyolefin resin.

Therefore, in the case where an inorganic filler is used in large quantities, an enclosed mixer such as a continuous kneader, a pressurized kneader, or a Banbury mixer is generally used.

However, when a silane grafting reaction is performed with a kneader or a Banbury mixer, the silane coupling agent having an unsaturated group generally has high volatility, so that it volatizes before the grafting reaction with polyolefin resin. An appearance defect is caused and heat resistance also tends to be deteriorated when it is not possible to suppress the volatilization of the silane coupling agent.

Accordingly, a method is proposed in which the volatilization of the silane coupling agent is suppressed even using a Banbury mixer or a kneader and the grafting reaction with polyolefin resin is then carried out. As such a method, for example, a method is considered in which a silane coupling agent having an unsaturated group and an organic peroxide are added to a heat-resistant master batch obtained by melt-blending polyolefin resin and a flame retardant as an inorganic filler and the graft polymerization is then carried out with a single-screw extruder. In addition, Patent Literature 1 proposes a method in which an inorganic filler surface-treated with a silane coupling agent, a silane coupling agent, an organic peroxide, and a crosslinking catalyst are thoroughly melt-blended into a polyolefin-based resin with a kneader, and then molded with a single-screw extruder.

### CITATION LIST

### PATENT LITERATURES

Patent Literature 1: JP-A-2001-101928 ("JP-A" means unexamined published Japanese patent application)

### SUMMARY OF INVENTION

### TECHNICAL PROBLEM

However, in the method in which a silane coupling agent having an unsaturated group and an organic peroxide are added to a heat-resistant master batch and the graft polymerization is then carried out with a single-screw extruder, although it is possible to increase the content of the flame retardant as an inorganic filler, there is room for improving the appearance defect of the molded body. In addition, in the method described in Patent Literature 1, there is a case where the volatilization of the silane coupling agent is not sufficiently suppressed.

In the meantime, flexibility and elongation properties are also important required properties in addition to heat resistance for such wiring materials used in electric equipment, electronic instruments and other wire cables, and thus those which are equipped with all of these properties are earnestly desired.

The present invention aims to solve the above problem and the like and to suppress the volatilization of the silane coupling agent when mixing or reaction and then provide a heat-resistant silane crosslinked resin molded body excellent in flexibility, heat resistance, elongation properties and appearance and a method for producing the same.

In addition, the present invention aims to provide a heat-resistant silane crosslinkable resin composition capable of being formed into the heat-resistant silane crosslinked resin molded body and a method for producing the resin composition.

Furthermore, the present invention aims to provide a heat-resistant product using a heat-resistant silane crosslinked resin molded body obtained by a method for producing a heat-resistant silane crosslinked resin molded body.

### SOLUTION TO PROBLEM

In a conventional silane crosslinking method, the reason for melt-blending a silane coupling agent separately from an inorganic filler without using an inorganic filler previously surface-treated with a silane coupling agent is because the silane coupling agent is volatilized when a silane coupling agent is added and melt-blended with a Banbury mixer or the like and thus it is not possible to obtain a sufficiently crosslinked body in some cases. Moreover, the silane coupling agents are polymerized with each other to cause gelling and thus an appearance defect is caused in some cases. In addition, it is not possible to knead an inorganic filler in a sufficient amount of filler when molding is conducted by adding a silane coupling agent in the presence of the inorganic filler with a closed type molding machine such as a biaxial molding machine. Furthermore, a side reaction of the silane coupling agent is caused by the exothermic reaction proceeding at the grafted portion of the resin component or the polymerization between the silane coupling agents is made, then an appearance defect may be caused.

With regard to the conventional silane crosslinking method having such a problem, the present inventors have found out that it is possible to impart all of the excellent flexibility, heat resistance, elongation properties and appearance to the heat-resistant silane crosslinked resin molded body to be produced by effectively suppressing gelling and volatilization of the unsaturated group-containing silane coupling agent while suppressing the amount of the unsaturated group-containing silane coupling agent that is hardly separated from the inorganic filler that is not subjected to the crosslinking reaction when the surface of the inorganic filler is previously treated with at least one kind of a fatty acid and a phosphorus acid ester and the unsaturated group-containing silane coupling agent is then added to the surface-treated inorganic filler in the method for adding the unsaturated group-containing silane coupling agent. The present inventors have further carried out studies based on these findings and made the present invention.

The above-described problems of the present invention can be solved by the following means.
(1) A method for producing a heat-resistant silane crosslinked resin molded body, comprising:
   (a) a step of preparing a silane master batch by melt-blending to 100 parts by mass of a resin composition (RC) containing a resin component (R); an organic peroxide (P) of from 0.01 to 0.6 parts by mass; an inorganic filler (F), containing a surface-treated inorganic filler (F_{T}) obtained by surface-treating a surface-untreated inorganic filler (F_{U}) with at least one kind of a fatty acid and a phosphoric acid ester of from 0.1 to 4.0% by mass with respect to the surface-untreated inorganic filler (F_{U}), of from 10 to 400 parts by mass; and an unsaturated group-containing silane coupling agent (S) of from 0.5 to 18.0 parts by mass with respect to 100 parts by mass of the surface-treated inorganic filler (F_{T}), at a temperature equal to or higher than the decomposition temperature of the organic peroxide;
   (b) a step of obtaining a mixture by mixing the silane master batch and a silanol condensation reaction catalyst (C);
   (c) a step of obtaining a molded body by molding the mixture; and
   (d) a step of obtaining a heat-resistant silane crosslinked resin molded body by contacting the molded body with water.
(2) The method for producing a heat-resistant silane crosslinked resin molded body described in the above item (1), wherein the surface-treated inorganic filler (F_{T}) is obtained by surface-treating with at least one kind of the fatty acid and the phosphoric acid ester of from 0.1 to 4.0% by mass and a hydrolyzable silane coupling agent of from 0.05 to 1.0% by mass.
(3) The method for producing a heat-resistant silane crosslinked resin molded body described in the above item (1) or (2), wherein the surface-treated inorganic filler (F_{T}) is obtained by surface-treating with the fatty acid of from 0.1 to 1.5% by mass with respect to the surface-untreated inorganic filler (F_{U}).
(4) The method for producing a heat-resistant silane crosslinked resin molded body described in any one of the above items (1) to (3), wherein the surface-treated inorganic filler (F_{T}) is obtained by surface-treating with the phosphoric acid ester of from 0.1 to 2.8% by mass with respect to the surface-untreated inorganic filler (F_{U}).
(5) The method for producing a heat-resistant silane crosslinked resin molded body described in any one of the above items (2) to (4), wherein the hydrolyzable silane coupling agent is an unsaturated group-containing silane coupling agent (S).
(6) The method for producing a heat-resistant silane crosslinked resin molded body described in any one of the above items (1) to (5), wherein the inorganic filler (F) contains a surface-untreated inorganic filler (F_{U}) that is not surface-treated.
(7) The method for producing a heat-resistant silane crosslinked resin molded body described in any one of the above items (1) to (6), wherein the inorganic filler (F) contains the surface-treated inorganic filler (F_{T}) of from 30 to 100% by mass with respect to the entire mass thereof.
(8) The method for producing a heat-resistant silane crosslinked resin molded body described in any one of the above items (1) to (7), wherein the surface-untreated inorganic filler (F_{U}) of the surface-treated inorganic filler (F_{T}) contains at least one kind of metal hydrate.
(9) The method for producing a heat-resistant silane crosslinked resin molded body described in the above item (8), wherein the metal hydrate contains magnesium hydroxide.
(10) The method for producing a heat-resistant silane crosslinked resin molded body described in the above item (8), wherein the metal hydrate contains calcium carbonate.
(11) The method for producing a heat-resistant silane crosslinked resin molded body described in any one of the above items (1) to (10), wherein the resin component (R) is contained in the resin composition (RC) in an amount of from 20 to 100% by mass.
(12) The method for producing a heat-resistant silane crosslinked resin molded body described in any one of the above items (1) to (11), wherein the step (a) comprising;
   (a1) a step of preparing a mixture by mixing the inorganic filler (F) with the unsaturated group-containing silane coupling agent (S) and subsequently mixing the organic peroxide (P) therewith at a temperature equal to or lower than the decomposition temperature thereof, and
   (a2) a step of preparing a silane master batch by melt-blending the mixture thus obtained and the resin composition (RC) at a temperature equal to or higher than the decomposition temperature of the organic peroxide (P).
(13) The method for producing a heat-resistant silane crosslinked resin molded body described in any one of the above items (1) to (12), wherein the step (b) is a step of mixing the silane master batch with a catalyst master batch containing the silanol condensation reaction catalyst (C) and a carrier resin (E).
(14) The method for producing a heat-resistant silane crosslinked resin molded body described in any one of the above items (1) to (13), wherein the step (a) is performed by melt-blending with a closed type mixer.
(15) A method for producing a heat-resistant silane crosslinkable resin composition, comprising the step (a) and the step (b) but not comprising, at least, the step (c).
(16) A heat-resistant silane crosslinkable resin composition produced by the method for producing a heat-resistant silane crosslinkable resin composition described in the above item (15).
(17) A heat-resistant silane crosslinked resin molded body produced by the method for producing a heat-resistant silane crosslinked resin molded body described in any one of the above items (1) to (14).
(18) A heat-resistant product having the heat-resistant silane crosslinked resin molded body described in the above item (17).
(19) The heat-resistant product described in the above item (18), wherein the heat-resistant silane crosslinked resin molded body is provided as a coating for an electric wire or an optical fiber cable.

Other and further features and advantages of the invention will appear more fully from the following description.

### ADVANTAGEOUS EFFECTS OF INVENTION

According to the present invention, a heat-resistant silane crosslinked resin molded body excellent in flexibility, heat resistance, elongation properties and appearance and a method for producing the same, and a heat-resistant silane crosslinkable resin composition capable of being formed into the heat-resistant silane crosslinked resin molded body and a method for producing the resin composition can be provided. In addition, according to the present invention, a heat-resistant product using a heat-resistant silane crosslinked resin molded body obtained by a method for producing a heat-resistant silane crosslinked resin molded body can be provided.

### MODE FOR CARRYING OUT THE INVENTION

The preferable embodiment of the present invention is described in detail below.

The "method for producing a heat-resistant silane crosslinked resin molded body" of the present invention has the step (a) of preparing a silane master batch by melt-blending to 100 parts by mass of a resin composition (RC) containing a resin component (R); an organic peroxide (P) of from 0.01 to 0.6 parts by mass; an inorganic filler (F), containing a surface-treated inorganic filler (F_{T}) obtained by surface-treating a surface-untreated inorganic filler (F_{U}) with at least one kind of a fatty acid and a phosphoric acid ester of from 0.1 to 4.0% by mass with respect to the surface-untreated inorganic filler (F_{U}), of from 10 to 400 parts by mass; and an unsaturated group-containing silane coupling agent (S) of from 0.5 to 18.0 parts by mass with respect to 100 parts by mass of the surface-treated inorganic filler (F_{T}), at a temperature equal to or higher than the decomposition temperature of the organic peroxide (P); the step (b) of obtaining a mixture by mixing the silane master batch and a silanol condensation reaction catalyst (C); the step (c) of obtaining a molded body by molding the mixture; and the step (d) of obtaining a heat-resistant silane crosslinked resin molded body by contacting the molded body with water.

The "method for producing a heat-resistant silane crosslinkable resin composition" of the present invention has the steps (a) and (b) but does not have at least the step (c), and if desired, the step (d).

As described above, the "method for producing a heat-resistant silane crosslinked resin molded body" of the present invention and the "method for producing a heat-resistant silane crosslinkable resin composition" of the present invention are basically the same other than the presence or absence of the step (c). Hence, the "method for producing a heat-resistant silane crosslinked resin molded body" of the present invention and the "method for producing a heat-resistant silane crosslinkable resin composition" of the present invention (in the description on the common part of the two methods, these may be collectively referred to as the production method of the present invention) will be collectively described below.

First, the components used in the present invention will be described.

### <Resin composition (RC)>

The resin composition (RC) used in the present invention includes a resin component (R) and if desired, various oils used as a plasticizer or a softener. The content of the resin component (R) in the resin composition (RC) is preferably 20% by mass or more, more preferably 45% by mass or more and particularly preferably 60% by mass or more with respect to the entire mass of the resin composition (RC) from the standpoint of heat resistance property, crosslinking property and strength. The content of the resin component (R) is 100% by mass in the maximum but can also be 80% by mass or less, for example.

It is preferable that oil is added into the resin composition (RC) in order to hold the flexibility and to maintain a good appearance. In the case, the oil in the resin composition (RC) is preferably set to 80% by mass as the upper limit, more preferably 55% by mass or less, and particularly preferably 40% by mass or less with respect to the entire mass of the resin composition (RC).

In addition, the resin composition (RC) may contain other components, for example, various kinds of additives to be described below and a solvent in addition to the resin component (R) and the oil.

### (Resin component (R))

Example of the resin component (R) may include a polyolefin-based resin (PO), a polyester resin, a polyamide-based resin (PA), a polystyrene-based resin (PS), a polyol-based resin, or the like. Among them, a polyolefin-based resin is preferable. The resin component (R) may be used singly alone, or be used by combining two or more kinds thereof.

The polyolefin-based resin is not particularly limited, and the polyolefin-based resins that are conventionally known and used for the heat-resistant silane closslinking resin composition can be used. Examples thereof may include resins of a polyethylene, polypropylene, an ethylene-α-olefin copolymer, a block copolymer of polypropylene with ethylene-α-olefin resin, and a polyolefin copolymer having an acid copolymerization component or an acid ester copolymerization component (these may be collectively referred to as an acid copolymerization component), rubbers and elastomers thereof, a styrene-based elastomer, a polyamide elastomer, a polyester elastomer, and an ethylene-propylene-based rubber (for example, ethylene-propylene-diene rubber), and the like. Among them, since high acceptability to various inorganic fillers such as metal hydrate can be exhibited, there is an effect on maintaining mechanical strength even if the inorganic fillers are combined in large quantities, and also while securing heat resistance, the decrease in withstand voltage properties, especially, withstand voltage properties at a high temperature can be suppressed, resins of a polyethylene, an ethylene-α-olefin copolymer, and a polyolefin copolymer having an acid copolymerization component, a styrene-based elastomer, and an ethylene-propylene-based rubber are preferable. The polyolefin based resin may be used singly alone, or be used by combining two or more kinds thereof.

Examples of the polyethylene may include high-density polyethylene (HDPE), low-density polyethylene (LDPE), ultra high molecular weight polyethylene (UHMW-PE), linear low-density polyethylene (LLDPE), and very-low-density polyethylene (VLDPE). Among them, linear low-density polyethylene or low-density polyethylene is preferable. The polyethylene may be used singly alone or be used by combining two or more kinds thereof.

Example of the α-olefin component of the ethylene-α-olefin copolymer preferably includes those having 3 to 12 carbon atoms. Specific examples of the α-olefin component may include components of propylene, 1-butene, 1-hexene, 4-methyl-1-pentene, 1-octene, 1-decene, 1-dodecene and the like. The ethylene-α-olefin copolymer is preferably a copolymer of ethylene with α-olefin component having 3 to 12 carbon atoms. Specific examples of the ethylene-α-olefin copolymer may include an ethylene-propylene copolymer (EPR), an ethylene-butylene copolymer (EBR), and an ethylene-α-olefin copolymer that is polymerized in the presence of a single-site catalyst. Ethylene-propylene copolymer is preferable. The ethylene-α-olefin copolymer may be used singly alone or be used by combining two or more kinds thereof.

Example of the block copolymer of polypropylene with an ethylene-α-olefin resin may include a copolymer having a polypropylene block and the ethylene-α-olefin copolymer block described above.

Example of the acid copolymerization component or the acid ester copolymerization component of the polyolefin copolymer having an acid copolymerization component may include vinyl acetate, (meth)acrylic acid, alkyl (meth)acrylate or the like. Herein, the alkyl group of the alkyl (meth)acrylate is preferably those having 3 to 12 carbon atoms, and example of those may include methyl group, ethyl group, propyl group, butyl group, or hexyl group.

Example of the polyolefin copolymer having an acid copolymerization component may include ethylene-vinyl acetate copolymer (EVA), ethylene-(meth)acrylic acid copolymers, ethylene-alkyl (meth)acrylate copolymers or the like. Among them, ethylene-vinyl acetate copolymers, ethylene-methyl acrylate copolymers, ethylene-ethyl acrylate copolymers, and ethylene-butyl acrylate copolymers are preferable, ethylene-vinyl acetate copolymers are particularly preferably from the standpoint of the acceptability to the inorganic filler (F) and heat resistance. The polyolefin copolymer having an acid copolymerization component may be used singly alone or be used by combining two or more kinds thereof.

Examples of the styrene-based elastomer may include a block copolymer and a random copolymer of a conjugated diene compound with an aromatic vinyl compound or a hydrogenated derivative thereof.

Examples of the aromatic vinyl compound may include styrene, p-(tert-butyl)styrene, α-methylstyrene, p-methylstyrene, divinylbenzene, 1,1-diphenylstyrene, N,N-diethyl-p-aminoethylstyrene, vinyltoluene, p-(tert-butyl)styrene and the like. Among them, styrene is preferable as the aromatic vinyl compound. The aromatic vinyl compound may be used singly alone, or be used by combining two or more kinds thereof.

Examples of the conjugated diene compound may include butadiene, isoprene, 1,3-pentadiene, 2,3-dimethyl-1,3-butadiene and the like. Among them, butadiene is preferable as the conjugated diene compound. The conjugated diene compound may be used singly alone, or be used by combining two or more kinds thereof.

Furthermore, as the styrene-based elastomer, an elastomer, obtained in the same manner, which does not contain a styrene component but contains an aromatic vinyl compound other than styrene may be used.

Specific examples of the styrene-based elastomer may include Septon 4077, Septon 4055, Septon 8105 (trade names, manufactured by Kuraray Co., Ltd.), Dynaron 1320P, Dynaron 4600P, 6200P, 8601 P and 9901 P (trade names, manufactured by JSR Corporation.), and the like.

### (Oil)

Examples of the oil contained in the resin composition (RC) if desired may include oil as a plasticizer the resin component (R) or a mineral oil softener of a rubber. The oil does not react with the unsaturated group-containing silane coupling agent (S) and thus is not included in the resin component (R), but may be contained in the resin composition (RC). The mineral oil softener is oil of a mixture composed of hydrocarbons as a combination of three oils having of an aromatic ring, a naphthenic ring and a paraffin chain. The mineral oils having a paraffin-chain carbon number of 50% or more of the total number of carbons are called paraffin oil; those having a naphthene-ring carbon number of 30 to 40% are called naphthene oil; and those having an aromatic carbon number of 30% or more are called aroma oil (aromatic oil). They are distinguished from each other by what they are called.

Among these, a liquid or low molecular weight synthetic softener, paraffin oil and naphthene oil are preferably used, and paraffin oil is particularly preferably used. Examples of such oil may include DIANA PROCESS OIL PW90, PW380 (trade names, manufactured by SHOWA SHELL SEKIYU K. K.), COSMO NEUTRAL 500 (trade name, manufactured by COSMO OIL CO., LTD.) and the like.

### <Organic peroxide (P)>

As the organic peroxide (P), the compound represented by the formula R¹-OO-R², R¹-OO-C(=O)R³, or R³C(=O)-OO(C=O)R⁴ is preferable. Herein, R¹, R², R³ and R⁴ each independently represent an alkyl group, an aryl group, and an acyl group. Among them, it is preferable that in the present invention, all of R¹, R², R³ and R⁴ be an alkyl group, or any one of them be an alkyl group, and the rest be an acyl group.

Examples of such organic peroxide may include dicumyl peroxide (DCP), di-tert-butyl peroxide, 2,5-dimethyl-2,5-di-(tert-butyl peroxy)hexane, 2,5-dimethyl-2,5-di(tert-butyl peroxy)hexine-3, 1,3-bis(tert-butyl peroxyisopropyl)benzene, 1,1-bis(tert-butyl peroxy)-3,3,5-trimethylcyclohexane, n-butyl-4,4-bis(tert-butyl peroxy)valerate, benzoyl peroxide, p-chlorobenzoyl peroxide, 2,4-dichlorobenzoyl peroxide, tert-butyl peroxybenzoate, tert-butyl peroxyisopropyl carbonate, diacetyl peroxide, lauroyl peroxide, tert-butylcumyl peroxide and the like. Among them, dicumyl peroxide, 2,5-dimethyl-2,5-di-(tert-butyl peroxy)hexane, or 2,5-dimethyl-2,5-di-(tert-butyl peroxy)hexine-3 is preferable, from the standpoint of the odor, the coloration, and the scorch stability.

The decomposition temperature of the organic peroxide (P) is preferably 80 to 195°C, and more preferably 125 to 180°C.

For the present invention, the decomposition temperature of the organic peroxide (P) means the temperature, in which when the organic peroxide (P) having a single composition is heated, the organic peroxide itself is subjected to a decomposition reaction into two or more kinds of the compound at a certain temperature or temperature range, and the temperature in which heat absorption or exothermic reaction is started when the organic peroxide is heated at room temperature in a heating rate of 5°C/min under a nitrogen gas atmosphere by a thermal analysis such as a DSC method.

### <Inorganic filler (F)>

The inorganic filler (F) used in the step (a) contains a surface-treated inorganic filler (F_{T}) but also can contain an inorganic filler other than the surface-treated inorganic filler (F_{T}). For example, in the present invention, it is possible to use a surface-untreated inorganic filler (F_{U}) of which the surface is not treated with a surface treatment agent and an inorganic filler of which the surface is treated with a hydrolyzable silane coupling agent and the like.

The surface-treated inorganic filler (F_{T}) contained in the inorganic filler (F) is at least 30% by mass or more, even more preferably 50% by mass or more and even more preferably 70% by mass or more with respect to the entire mass of the inorganic filler (F). When the content of the surface-treated inorganic filler (F_{T}) is 30% by mass or less, there is a case where at least one of heat resistance and flexibility of the heat-resistant silane crosslinked resin molded body deteriorates. Examples of the balance in the inorganic filler (F) may include other inorganic fillers such as a surface-untreated inorganic filler (F_{U}) and an inorganic filler of which the surface is treated with a hydrolyzable silane coupling agent and the like.

In the case where the inorganic filler (F), for example a surface-untreated inorganic filler (F_{U}), a surface-treated inorganic filler (F_{T}), is a powder, an average particle diameter is preferably 0.2 to 10 µm, more preferably 0.3 to 8 µm, and still more preferably 0.35 to 5 µm and particularly preferably 0.35 to 3 µm. When the average particle diameter of the inorganic filler (F) is less than 0.2 µm, it is apprehended that when mixing with an unsaturated group-containing silane coupling agent (S), second aggregation of the inorganic fillers (F) occurs, and thus the appearance of the heat-resistant silane crosslinked resin molded body is deteriorated or the aggregated substances are generated. On the other hand, when it exceeds 10 µm, it is apprehended that the appearance is deteriorated, or the effect on maintaining the unsaturated group-containing silane coupling agent (S) is reduced, thereby generating the problem in crosslinking. In addition, the average particle diameter is obtained by dispersing the inorganic filler (F) in alcohol or water, and then measuring using an optical particle diameter measuring device such as a laser diffraction/scattering particle diameter distribution measuring device.

### (Surface-untreated inorganic filler (F_{U}))

The surface-untreated inorganic filler (F_{U}) is an inorganic filler of which the surface is not treated and is the base of the surface-treated inorganic filler (F_{T}). The above surface-untreated inorganic filler (Fu) is not particularly limited, and examples thereof may include metal hydrate such as a compound having a hydroxy group or crystallized water, for example, aluminum hydroxide, magnesium hydroxide, calcium carbonate, magnesium carbonate, calcium silicate, magnesium silicate, calcium oxide, magnesium oxide, aluminum oxide, aluminum nitride, aluminum borate, hydrated aluminum silicate, alumina, hydrated magnesium silicate, basic magnesium carbonate, and hydrotalcite. Other examples of the surface-untreated inorganic filler (F_{U}) may include boron nitride, silica (crystalline silica, amorphous silica, and the like), carbon, clay, zinc oxide, tin oxide, titanium oxide, molybdenum oxide, antimony trioxide, a silicone compound, quartz, talc, zinc borate, white carbon, zinc borate, zinc hydroxystannate, zinc stannate, and the like. Among them, metal hydrate is preferable, and magnesium hydroxide, calcium carbonate, aluminum hydroxide magnesium carbonate or the like is particularly preferable.

### (Surface-treated inorganic filler (F_{T}))

The surface-treated inorganic filler (F_{T}) is the one obtained by surface-treating the surface-untreated inorganic filler (F_{U}) with at least one kind of a fatty acid and a phosphoric acid ester or with at least one kind of these and a hydrolyzable silane coupling agent. When the surface-untreated inorganic filler (F_{U}) is previously surface-treated, it is possible to suppress that the unsaturated group-containing silane coupling agent (S) and the surface-treated inorganic filler (F_{T}) are strongly bonded to each other, and thus to produce an unsaturated group-containing silane coupling agent (S) which is bonded to the surface-treated inorganic filler (F_{T}) by a weak bond to a certain extent. It is possible to obtain a heat-resistant silane crosslinked resin molded body having a crosslinking degree to a certain extent by this unsaturated group-containing silane coupling agent (S) bonded to the surface-treated inorganic filler (F_{T}) by the weak bond. This makes it possible to secure flexibility and elongation properties even though high heat resistance is exerted. Hence, the amount of at least one kind of the fatty acid and the phosphoric acid ester used for the surface treatment of the surface-untreated inorganic filler (F_{U}) subjected to the previous surface treatment is limited. Specifically, the surface of the surface-untreated inorganic filler (F_{U}) is surface-treated with at least one kind of the fatty acid and the phosphoric acid ester of from 0.1 to 4.0% by mass with respect to 100 parts by mass thereof as to be described below.

In the present invention, the silane coupling agent which is strongly bonded to the surface-treated inorganic filler (F_{T}) refers to a silane coupling agent which is bonded to the surface of the surface-treated inorganic filler (F_{T}) by a chemical bond (hydrolysis of silane coupling agent), and the silane coupling agent which is weakly bonded to the surface-treated inorganic filler (F_{T}) refers to a silane coupling agent which is in the state of being physically-adsorbed onto the surface of the surface-treated inorganic filler (F_{T}) or mixing with the surface-treated inorganic filler (F_{T}).

The fatty acid used for the surface treatment of the surface-untreated inorganic filler (F_{U}) is not particularly limited, and examples thereof may include a saturated fatty acid having 10 to 22 carbon atoms and an unsaturated fatty acid having 10 to 22 carbon atoms. Examples of the saturated fatty acid having 10 to 22 carbon atoms may include capric acid, lauric acid, myristic acid, palmitic acid, stearic acid, arginine and behenic acid. Examples of the unsaturated fatty acid having 10 to 22 carbon atoms may include oleic acid, linolenic acid and linoleic acid.

The phosphoric acid ester used for the surface treatment of the surface-untreated inorganic filler (F_{U}) is not particularly limited, and examples thereof may include a phosphoric acid monoester, a phosphoric acid diester and a phosphoric acid triester. Example of the organic group may include an aliphatic group or an aromatic group. Example of the aliphatic group may include an alkyl group having 1 to 8 carbon atoms, an alkenyl group having 2 to 8 carbon atoms, or an alkynyl group having 2 to 8 carbon atoms. Example of the alkyl group having 1 to 8 carbon atoms may include methyl group, ethyl group, propyl group, butyl group or the like. Example of the alkenyl group having 2 to 8 carbon atoms may include vinyl group, propenyl group, or the like. Example of the alkynyl group having 2 to 3 carbon atoms may include acetynyl group, propynyl group, or the like. Example of the aryl group may include phenyl group or the like.

The hydrolyzable silane coupling agent used for the surface treatment of the surface-untreated inorganic filler (F_{U}) is not particularly limited, and those which have an amino group, a vinyl group, a (meth)acryloyloxy group and a glycidyl group at the terminal are preferable and those which have a vinyl group and a (meth)acryloyloxy group at the terminal are even more preferable.

Example of the hydrolyzable silane coupling agent which have an amino group at the terminal may include those which have an aminoalkyl group, and specific example thereof may include N-(2-aminoethyl)-3-aminopropylmethyldimethoxysilane, N-(2-aminoethyl)-3-aminopropyltrimethoxysilane, N-(2-aminoethyl)-3-aminopropyltriethoxysilane, 3-aminopropyltrimethoxysilane, 3-aminopropyltriethoxysilane, 3-triethoxysilyl-N-(1,3-dimethly-butyliden)propylamine, N-phenyl-3-aminopropyltrimethoxysilane, or the like. Example of the hydrolyzable silane coupling agent which have a vinyl group or a (meth)acryloyloxy group at the terminal may include the unsaturated group-containing silane coupling agent (S) to be described below.

Example of the hydrolyzable silane coupling agent which have a glycidyl group at the terminal may include 3-glycidoxypropyltriethoxysilane, 3-glycidoxypropylmethydiethoxysilane, 3-glycidoxypropyltrimethoxysilane, 3-glycidoxypropylmethyldimethoxysilane, 2-(3,4-epoxycyclohexyl)ethyltrimethoxysilane, or the like.

The surface of the surface-treated inorganic filler (F_{T}) is treated with at least one kind selected form the group consisting of the fatty acid and the phosphoric acid ester or with at least one kind of these and the hydrolyzable silane coupling agent. In the case, each of the fatty acid and the phosphoric acid ester may be used singly alone or may be used by combining two or more kinds thereof or may be used by combining at least one kind of fatty acid and at least one kind of phosphoric acid ester. In addition, the hydrolyzable silane coupling agent is used singly alone or may be used by combining two or more kinds thereof but is used together with the fatty acid or the phosphate ester.

In addition, the fatty acid, the phosphate ester and the hydrolyzable silane coupling agent may be used by combining other surface treatment agents. Other surface treatment agents are not particularly limited, and examples thereof may include polyester and a titanate coupling agents. These other surface treatment agent is used at a proportion of 4.0% by mass or less as the total amount with the fatty acid, the phosphate ester and the hydrolyzable silane coupling agent with respect to the surface-untreated inorganic filler (F_{U}). When the amount used is too much, the crosslinking density decreases and thus the strength and/or heat resistance of the heat-resistant silane crosslinked resin molded body decreases in some cases.

The surface-treated inorganic filler (F_{T}) may be appropriately prepared, or a commercially available product can be used. Example of the magnesium hydroxide which is surface-treated with a fatty acid (compound name: stearic acid or oleic acid) may include Kisuma 5A, Kisuma 5B (trade names, manufactured by Kyowa Chemical Industry Co., Ltd.)), Magseeds N6 (trade name, manufactured by KONOSHIMA Chemical Co., Ltd.)), or the like. In addition, example of the aluminium hydroxide which is surface-treated with a fatty acid (compound name: stearic acid) may include HIGILITE H42-S (trade name, manufactured by SHOWA DENKO K.K.,)) or the like. Further, example of the calcium carbonate which is surface-treated with a fatty acid (compound name: stearic acid) may include LIGHTON BSO (trade name, BIHOKU FUNKA KOGYO CO., LTD.) or the like.

Example of the magnesium hydroxide which is surface-treated with the phosphoric acid ester (compound name: stearyl phosphate) may include Kisuma 5J (trade name, manufactured by Kyowa Chemical Industry Co., Ltd.)) or the like.

In addition, the surface-treated inorganic filler (F_{T}) which is surface-treated with the fatty acid and/or the phosphoric acid ester and the hydrolyzable silane coupling agent can be prepared by further surface-treating an inorganic filler which is previously surface-treated with the fatty acid and/or the phosphoric acid ester with the hydrolyzable silane coupling agent.

### <Unsaturated group-containing silane coupling agent (S)>

The unsaturated group-containing silane coupling agent (S) is not particularly limited, and a silane coupling agent having an unsaturated group conventionally used for a silane crosslinking method may be used. The unsaturated group-containing silane coupling agent (S) represented by the following General Formula (1) can be preferably used as the unsaturated group-containing silane coupling agent (S).

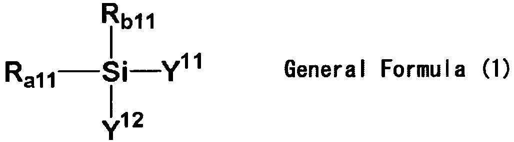

Wherein, Rₐ₁₁ represents a group having ethylenically unsaturated group, R_{b11} represents an aliphatic hydrocarbon group, a hydrogen atom, or Y¹³. Y¹¹, Y¹², and Y¹³ each independently represent a hydrolyzable organic group. Y¹¹, Y¹², and Y¹³ may be the same or different from each other.

Example of the group having ethylenically unsaturated group, Rₐ₁₁ may include a vinyl group, an alkylenyl group having a unsaturated bond at the terminal, a (meth)acryloyl oxyalkylene group, a p-styryl group, or the like, and a vinyl group is more preferable.

R_{b11} represents an aliphatic hydrocarbon group, a hydrogen atom, or Y¹³ to be described below. Example of the aliphatic hydrocarbon group may include a monovalent aliphatic hydrocarbon group having 1 to 8 carbon atoms other than an aliphatic unsaturated hydrocarbon. Examples of the monovalent aliphatic hydrocarbon group having 1 to 8 carbon atoms may include those which are the same as those which have 1 to 8 carbon atoms among the alkyl groups of the alkyl (meth)acrylate. R_{b11} is preferably Y¹³.

Y¹¹, Y¹², and Y¹³ each independently represent a hydrolyzable organic group , and examples thereof may include an alkoxy group having 1 to 6 carbon atoms, an aryloxy group having 6 to 10 carbon atoms, and an acyloxy group having 1 to 4 carbon atoms. Among them, an alkoxy group having 1 to 6 carbon atoms is preferable. Specific examples of the alkoxy group having 1 to 6 carbon atoms may include methoxy group, ethoxy group, propoxy group, butoxy group, hexyloxy group, and the like. From the standpoint of the reactivity of the hydrolysis, a methoxy group or an ethoxy group is preferable.

As the silane coupling agent (S) represented by the General Formula (1), a silane coupling agent that has an ethylenically unsaturated group and high hydrolysis rate is preferable, and a silane coupling agent, in which R_{b11} of the General Formula (1) is Y¹³ and also Y¹¹, Y¹², and Y¹³ of the General Formula (1) are the same organic group each other, is more preferable. Specific example of the preferable silane coupling agent (S) may include a unsaturated group-containing silane coupling agent having a vinyl group at the terminal such as vinyltrimethoxysilane, vinyltriethoxysilane, vinyltributoxysilane, vinyldimethoxyethoxysilane, vinyldimethoxybutoxysilane, vinyldiethoxybutoxysilane, allyltrimethoxysilane, allyltriethoxysilane vinyltriacetoxysilane; a unsaturated group-containing silane coupling agent having a (meth)acryloyl oxyalkylene group at the terminal such as (meth)acyloxypropyltrimethoxysilane, (meth)acyloxypropyltriethoxysilane, (meth)acyloxypropylmethyldimethoxysilane. The unsaturated group-containing silane coupling agent (S) may be used singly alone, or two or more kinds thereof. Among them, the unsaturated group-containing silane coupling agent having a vinyl group and an alkoxy group at the terminal is more preferable, and vinyltrimethoxysilane or vinyltriethoxysilane is particularly preferable.

The unsaturated group-containing silane coupling agent (S) may be used as it is or may be used as solution of it by diluting with a solvent.

### <Silanol condensation reaction catalyst (C)>

The silanol condensation reaction catalyst (C) has an action of binding the unsaturated group-containing silane coupling agent (S) which is grafted onto the resin component (R) to each other by a condensation reaction in the presence of water. Based on the action of the silanol condensation reaction catalyst (C), the resin components (R) are crosslinked through the unsaturated group-containing silane coupling agent (S). As a result, the heat-resistant silane crosslinked resin molded body having excellent heat resistance can be obtained.

As the silanol condensation reaction catalyst (C), an organic tin compound, a metal soap, a platinum compound, and the like are used. General examples of the silanol condensation reaction catalyst (C) may include dibutyltin dilaurate, dioctyltin dilaurate, dibutyltin dioctylate, dibutyltin diacetate, zinc stearate, lead stearate, barium stearate, calcium stearate, sodium stearate, lead naphthenate, lead sulfate, zinc sulfate, an organic platinum compound, and the like. Among them, the organic tin compound such as dibutyltin dilaurate, dioctyltin dilaurate, dibutyltin dioctylate, and dibutyltin diacetate are particularly preferable.

### <Carrier resin (E)>

The carrier resin (E) to be added to the catalyst master batch if desired is not particularly limited, and it is also possible to use a part of the resin component (R) to be used for the resin composition (RC) or a resin that is different from the resin component (R). Examples of the carrier resin (E) which is separately used from the resin component (R) may include the same resin as the resin component (R) of the resin composition (RC). It is preferable to use a part of the resin component (R) as the carrier resin (E). The carrier resin (E) is preferably a polyolefin-based resin and particularly preferably polyethylene from the standpoint of favorable affinity for the silanol condensation reaction catalyst (C) and excellent heat resistance. The carrier resin (E) may be used together with a surface-untreated inorganic filler (F_{U}) or other fillers.

The inorganic filler that is used together with the carrier resin (E), namely, added after the unsaturated group-containing silane coupling agent (S) is preferably 350 parts by mass or less with respect to 100 parts by mass of the resin component (R) of the resin composition (RC). When the amount of the inorganic filler added is too much, the silanol condensation reaction catalyst (C) is hardly dispersed and the crosslinking reaction hardly proceeds in some cases.

### <Additive>

To the heat-resistant silane crosslinked resin molded body and the heat-resistant silane crosslinkable resin composition, various additives, for example, an crosslinking assistant, an antioxidant, a lubricant, a metal inactivator, a filler, or other resins, which are generally used for an electric wire, electric cable, electric code, sheet, foam, tube, and pipes, may be properly used in the range that does not adversely affect the purpose of the present invention. These additives may be contained in any of the components but may be contained in the catalyst master batch. In particular, the antioxidant and the metal deactivator are preferably mixed in the catalyst master batch together with the carrier resin (E) so as not to inhibit the grafting of the unsaturated group-containing silane coupling agent (S) mixed in the inorganic filler (F) onto the resin component (R). In the case, it is preferable that the crosslinking assistant is not substantially contained. Especially, it is preferable that the crosslinking assistant be not substantially mixed in the step (a) of producing the master batch. When the crosslinking assistant is mixed, it is apprehended that the crosslinking assistant is reacted by the organic peroxide (P) during the blending to make the crosslinking between the resin components (R) and gelling, thereby significantly decreasing the appearance of the heat-resistant silane crosslinked resin molded body. In addition, it is apprehended that the grafting reaction of the unsaturated group-containing silane coupling agent (S) onto the resin component (R) is not proceeded, thereby not conclusively obtaining the heat resistance for the heat-resistant silane crosslinked resin molded body. Here, the term "is not substantially contained or is not substantially mixed" means that the crosslinking assistant is not actively added or mixed and it is not intended to exclude the crosslinking assistant which is inevitably contained or mixed.

The crosslinking assistant is referred to as one forming a partial crosslinking structure with the resin component (R) in the presence of the organic peroxide, and example thereof may include a polyfunctional compound, for example, a methacrylate-series compound such as polypropyleneglychol diacrylate and trimethylolpropane triacrylate, an allyl-series compound such as triallyl cyanurate, a maleimide-series compound, or a divinyl-series compound.

Examples of the antioxidant may include an amine-based antioxidant such as 4,4'-dioctyl-diphenylamine, N,N'-diphenyl-p-phenylenediamine, 2,2,4-trimethyl-1,2-dihydroquinoline polymer; a phenol-based antioxidant such as pentaerythritol-tetrakis(3-(3,5-di-tert-butyl-4-hydroxyphenyl)propionate), octadecyl-3-(3,5-di-tert-butyl-4-hydroxyphenyl)propionate, 1,3,5-trimethyl-2,4,6-tris(3,5-di-tert-butyl-4-hydroxybenzyl)benzene; and a sulfur-based antioxidant such as bis(2-methyl-4-(3-n-alkylthiopropionyloxy)-5-tert-butylphenyl)sulfide, 2-mercaptobenzimidazole and zinc salts thereof, and pentaerythritol-tetrakis(3-lauryl-thiopropionate). An antioxidant is preferably included in a content of 0.1 to 15.0 parts by mass and more preferably included in a content of 0.1 to 10 parts by mass with respect to 100 parts by mass of the resin component (R).

Examples of the lubricant may include hydrocarbon-based, siloxane-based, fatty-acid-based, fatty-acid-amide-based, ester-based, alcohol-based, metal-soap-based lubricants. These lubricants are preferably added to the carrier resin (E).

Examples of the metal deactivator may include N,N'-bis(3-(3,5-di-tert-butyl-4-hydroxyphenyl)propionyl)hydrazine, 3-(N-salicyloyl)amino-1,2,4-triazole, and 2,2'-oxamidebis(ethyl-3-(3,5-di-tert-butyl-4-hydroxyphenyl)propionate).

Examples of the filler (containing a flame retardant (a flame retardant auxiliary)) may include fillers except the inorganic filler (F), the surface-untreated inorganic filler (F_{U}), the surface-treated inorganic filler (F_{T}), and other inorganic filler. These fillers may be used when mixing the unsaturated group-containing silane coupling agent (S) along with the inorganic filler (F), or may be added to the catalyst master batch.

Next, the production method of the present invention is described below.

The "method for producing a heat-resistant silane crosslinked resin molded body" of the present invention has the steps (a), (b), (c), and (d) as described above. And the "method for producing a heat-resistant silane crosslinkable resin composition" of the present invention has the steps (a) and (b) but does not have at least the step (c), and if desired, the step (d).

In the production method of the present invention, a silane master batch is produced by melt-blending to 100 parts by mass of a resin composition (RC) containing a resin component (R); an organic peroxide (P) of from 0.01 to 0.6 parts, an inorganic filler (F), containing a surface-treated inorganic filler (F_{T}), of from 10 to 400 parts by mass, and an unsaturated group-containing silane coupling agent (S) of from 0.5 to 18.0 parts by mass at a temperature equal to or higher than the decomposition temperature of the organic peroxide (P) (step (a)).

In the production method of the present invention, the term "(with respect) to 100 parts by mass of the resin composition (RC)" is meant to include the "embodiment in which 100 parts by mass of the resin composition (RC) and other components are mixed" in the step (a) and the "embodiment in which a part of 100 parts by mass of the resin composition (RC), for example, the resin component (R) is mixed in a step after the step (a), for example, the step (b)". Hence, in the production method of the present invention, the mixing embodiment of the resin composition (RC) is not particularly limited as long as 100 parts by mass of the resin composition (RC) is contained in the "heat-resistant silane crosslinkable resin composition". Specifically, the entire amount of the resin component (R) to be contained in the resin composition (RC) may be mixed in the step (a) together with other components or a part thereof may be mixed in the step (b) as a part or whole of the carrier resin (E) of the catalyst master batch to be described below.

Here, the resin component (R) to be mixed in the step (b) is preferably from 1 to 20 parts by mass and particularly preferably from 2 to 6 parts by mass of 100 parts by mass of the resin composition (RC). In addition, in the case of mixing a part of the resin component (R) in the step (b), the content of the resin composition (RC) in the step (a) also includes the content of the resin component (R) to be mixed in the step (b). Hence, the "method for producing a heat-resistant silane crosslinked resin molded body" of the present invention in the case of mixing the resin component (R) in the step (b) has a step of preparing the heat-resistant silane crosslinkable resin composition of the present invention by mixing the resin composition (RC), the organic peroxide (P), the inorganic filler (F), the unsaturated group-containing silane coupling agent (S) and the silanol condensation reaction catalyst (C), and the step (c) and the step (d) described above, the step of preparing the heat-resistant silane crosslinkable resin composition which has the step (a') of preparing a silane master batch by blending from 80 to 99 parts by mass of the resin composition (RC), the organic peroxide (P), the inorganic filler (F) and the unsaturated group-containing silane coupling agent (S), and the step (b) of obtaining a mixture by mixing the silane master batch thus obtained with the silanol condensation reaction catalyst (C) and from 1 to 20 parts by mass of the balance of the resin component (R) as the carrier resin (E).

The surface-treated inorganic filler (F_{T}) used in the step (a) has been surface-treated with at least one kind of the fatty acid and the phosphoric acid ester of from 0.1 to 4.0% by mass with respect to 100 parts by mass of the surface-untreated inorganic filler (F_{U}) that is not surface-treated. When the amount used for surface treatment is more than 4.0% by mass, the unsaturated group-containing silane coupling agent (S) to be added later is repelled by the fatty acid and the phosphoric acid ester and thus cannot come close to the surface-treated inorganic filler (F_{T}) at all and a large number of the unsaturated group-containing silane coupling agent (S) which are not bonded to the surface-treated inorganic filler (F_{T}) at all are formed. Hence, the unsaturated group-containing silane coupling agent (S) is likely to volatilize during blending, and thus the crosslinking density of the heat-resistant silane crosslinked resin molded body decreases and the strength, heat resistance and/or appearance thereof deteriorate in some cases. On the other hand, when the amount of the fatty acid and the phosphoric acid ester used for surface treatment is less than 0.1 % by mass, not only the surface treatment effect by the fatty acid and the phosphoric acid ester, for example flexibility, elongation properties and heat resistance are not sufficiently exerted but also the silane coupling agent and the filler form a strong bond so that a large number of the silane coupling agent that is not subjected to the crosslinking reaction are formed. Hence, the crosslinking degree decreases, and the silane coupling agent that is strongly reacted with the filler bonds to the filler and the polymer so as to form a rigid material.

The amount used for surface treatment is preferably from 0.1 to 3.0% by mass and particularly preferably from 0.15 to 2.0% by mass with respect to 100 parts by mass of the surface-untreated inorganic filler (F_{U}) from the standpoint that the surface-untreated inorganic filler (F_{U}) is excellent in any of flexibility, elongation properties and heat resistance of the heat-resistant silane crosslinked resin molded body.

Especially, the amount of the fatty acid used for surface treatment is preferably from 0.1 to 1.5% by mass and even more preferably from 0.15 to 1% by mass, the amount of the phosphoric acid ester used for surface treatment is preferably from 0.1 to 2.8% by mass and even more preferably from 0.2 to 2.0% by mass.

In addition, in the case of using the hydrolyzable silane coupling agent in combination, the total amount of the fatty acid, the phosphoric acid ester and the hydrolyzable silane coupling agent used for surface treatment is preferably from 0.15 to 5.0% by mass and particularly preferably from 0.3 to 2.0% by mass. In the case, the amounts of the fatty acid and the phosphoric acid ester used for surface treatment are selected from the above ranges, respectively, and the amount of the hydrolyzable silane coupling agent used for surface treatment is selected from the range of from 0.05 to 1.0% by mass and preferably from the range of from 0.15 to 0.8% by mass.

In the case of preparing such a surface-treated inorganic filler (F_{T}), for example, the fatty acid, the phosphoric acid ester and the hydrolyzable silane coupling agent are mixed in the predetermined amounts with respect to 100 parts by mass of the surface-untreated inorganic filler (F_{U}) which is not surface-treated. The mixing method is not particularly limited, and examples thereof may include a method of wet-mixing and a method of dry-mixing. Examples of the method of dry-mixing may preferably include a method in which the surface-untreated inorganic filler (F_{U}) that is dried and the fatty acid and the like are added and mixed while heating or without heating. Examples of the method of wet-mixing may include a method in which the fatty acid and the like are added in a state in which the surface-untreated inorganic filler (F_{U}) is dispersed in a solvent such as water. The method of dry-mixing is preferable between these.

In the production method of the present invention, in a case where the inorganic filler (F) contains other inorganic fillers, for example, a surface-untreated inorganic filler (F_{U}), the inorganic filler (F) is prepared by mixing the surface-treated inorganic filler (F_{T}) and the other inorganic fillers.

The step (a) is to melt-blend the resin composition (RC), the organic peroxide (P), the inorganic filler (F) and the unsaturated group-containing silane coupling agent (S) together at a temperature equal to or higher than the decomposition temperature of the organic peroxide (P). Here, in the case of using a part of the resin component (R) of the resin composition (RC) as the carrier resin (E) to be described below, the total amount of the resin composition (RC) to be mixed in the step (a) and the step (b) is set to "100 parts by mass" and then the contents of the respective components in the step (a) and the step (b) are determined as described above.

The content of the organic peroxide (P) is within the range of 0.01 to 0.6 part by mass, and preferably 0.1 to 0.5 part by mass with respect to 100 parts by mass of the resin composition (RC). When the content of the organic peroxide (P) is within the above range, the polymerization of the resin component (R) may be performed in a proper range, the aggregated substances formed by a crosslinked gel is not generated, and the composition having excellent extrudable property can be obtained. In other words, when the content of the organic peroxide (P) is less than 0.010 part by mass, the crosslinking reaction of the resin component (R) does not proceed or the free silane coupling agents bond with each other and thus it is not possible to obtain sufficient heat resistance and mechanical strength in some cases. On the other hand, when the content of the organic peroxide (P) is more than 0.6 part by mass, the resin components (R) are crosslinked with each other and thus molding cannot be conducted in some cases. Even if molding is conducted, the unsaturated group-containing silane coupling agent (S) is likely to volatilize and further it is apprehended that too many of the resin components (R) are directly crosslinked with each other by the side reaction and thus aggregated substances are generated on the molded body.

The content of the inorganic filler (F) is from 10 to 400 parts by mass, preferably from 30 to 280 parts by mass with respect to 100 parts by mass of the resin composition (RC). In the case where the content of the inorganic filler (F) is less than 10 parts by mass, it is apprehended that the grafting reaction of the unsaturated group-containing silane coupling agent (S) is non-uniformly made, and thus, the desired heat resistance is not obtained, or the appearance is deteriorated due to the non-uniform reaction. On the other hand, in the case where it exceeds 400 parts by mass, it is apprehended that since the loading is very high when molding or blending, it is difficult to perform a secondary molding.

The content of the unsaturated group-containing silane coupling agent (S) is from 0.5 to 18.0 parts by mass with respect to 100 parts by mass of the surface-treated inorganic filler (F_{T}). In a case where the content of the unsaturated group-containing silane coupling agent (S) is less than 0.5 part by mass, it is apprehended that the crosslinking reaction does not sufficiently proceed and thus the heat-resistant silane crosslinkable resin composition and the heat-resistant silane crosslinked resin molded body do not exert the desired heat resistance, flexibility or elongation properties. On the other hand, when the content is more than 18.0 parts by mass, the entire amount of the unsaturated group-containing silane coupling agent (S) cannot be adsorbed on the surface of the surface-treated inorganic filler (F_{T}) in some cases. As a result, the unsaturated group-containing silane coupling agent (S) that is not adsorbed is volatilized during blending. In addition, it is apprehended that the unsaturated group-containing silane coupling agents (S) that are not adsorbed are condensed with each other so as to cause aggregated substances of the crosslinked gel or burning on the heat-resistant silane crosslinked resin molded body and the appearance thereof deteriorates. Furthermore, it is not economical as well. The content of the unsaturated group-containing silane coupling agents (S) is preferably from 1.0 to 12.0 parts by mass, and more preferably from 2.5 to 8 parts by mass.

The content of the unsaturated group-containing silane coupling agent (S) may be in the above range with respect to 100 parts by mass of the surface-treated inorganic filler (F_{T}), but the content with respect to 100 parts by mass of the resin component (R) is preferably within the following range. The content with respect to 100 parts by mass of the resin component (R) is preferably from 0.5 to 18.0 parts by mass and more preferably from 1.0 to 8.0 parts by mass. In a case where the content of the unsaturated group-containing silane coupling agent (S) is less than 0.5 part by mass, it is apprehended that the crosslinking reaction does not sufficiently proceed and thus the heat-resistant silane crosslinkable resin composition and the heat-resistant silane crosslinked resin molded body do not exert the desired heat resistance. On the other hand, when the content is more than 18.0 parts by mass, the unsaturated group-containing silane coupling agents (S) are condensed with each other so as to cause aggregated substances of the crosslinked gel or burning on the heat-resistant silane crosslinked resin molded body and the appearance thereof deteriorates.

In the step (a), the resin composition (RC), the organic peroxide (P), the inorganic filler (F), and the unsaturated group-containing silane coupling agent (S) are melt-blending at a temperature equal to or higher than the decomposition temperature of the organic peroxide (P). The blending temperature is the decomposition temperature of the organic peroxide (P) or higher, and preferably, the decomposition temperature of the organic peroxide (P) + 25°C to 110°C. The decomposition temperature is preferably set after melting the resin component (R). In addition, the blending condition, such as a blending time may be appropriately determined. In the case where the blending is performed at less than the decomposition temperature of the organic peroxide (P), the silane grafting reaction, the bonding reaction of the surface-treated inorganic filler (F_{T}) and the resin component (R), and the bonding of the inorganic fillers (F) are not made, and thus, the desired heat resistance cannot be obtained and also the organic peroxide (P) is decomposed during the extrusion, and thus, the desired shape cannot be molded in some cases.

As a blending method, a method that is generally used with a rubber and plastic can be satisfactorily used, and a blending device may be selected depending on the amount of the inorganic filler (F). As a blending device, a single-screw extruder, a twin-screw extruder, a roll, a Banbury mixer, or various kneaders may be used, but an enclosed mixer such as Banbury mixer or various kneaders is preferable from the standpoint of the dispersibility of the resin component (R) and the stability of the crosslinking reaction.

In addition, in the case where the inorganic filler (F) exceeds 100 parts by mass with respect to 100 parts by mass of the resin composition (RC), the blending is generally performed with a continuous blender, a pressured kneader, or a Banbury mixer.

In the step (a), the resin composition (RC), the organic peroxide (P), the inorganic filler (F) and the unsaturated group-containing silane coupling agent (S) can be mixed together at a time. In this case, it is preferable to disperse the organic peroxide (P), the inorganic filler (F) and the unsaturated group-containing silane coupling agent (S) in the mixer at below the temperature at which the resin component (R) melts using a mixer type kneader such as a Banbury mixer or a kneader and then to melt-blend them. When the resin component (R) melts before dispersing them, the organic peroxide (P) is decomposed by the heat or blending share, the crosslinking reaction of the resin components (R) proceeds, and thus an appearance defect is caused.

From the standpoint of preventing the regional generation of the aggregated substances formed by a crosslinked gel, it is preferable that the step (a) has the step (a1) of preparing a mixture by mixing the inorganic filler (F) with the unsaturated group-containing silane coupling agent (S) and mixing and dispersing the organic peroxide (P) thereto at a temperature that is equal to or higher than the decomposition temperature of the organic peroxide (P) and the step (a2) of preparing a silane master batch by melt-blending the mixture thus obtained and the resin component (R) at a temperature that is equal to or higher than the decomposition temperature of the organic peroxide (P).

In the step (a1), it is preferable that the inorganic filler (F) and the unsaturated group-containing silane coupling agent (S) are mixed together at below the decomposition temperature of the organic peroxide (P) and preferably at room temperature. The mixing of the inorganic filler (F) with the unsaturated group-containing silane coupling agent (S) and the organic peroxide (P) may be conducted by a mixing method such as a method of wet-mixing and a method of dry-mixing.

The method of dry-mixing and the method of wet-mixing in the step (a1) is basically the same as the method of dry-mixing and the method of wet-mixing when preparing the surface-treated inorganic filler (F_{T}) except that the components to be mixed is different therefrom. In the method of wet-mixing, since it is easy to strongly bond between the silane coupling agent (S) and the surface-treated inorganic filler (F_{T}), it is less likely that the subsequent condensation reaction proceeds. On the other hand, in the method of dry-mixing, the bond between the surface-treated inorganic filler (F_{T}) and the silane coupling agent (S) is relatively week, and thus, the crosslinking reaction is easy to proceed teffectively.

The combination of the mixing method when preparing the surface-treated inorganic filler (F_{T}) and the mixing method of the step (a1) is not particularly limited, but it is particularly preferable that the mixing method for preparing the surface-treated inorganic filler (F_{T}) and the mixing method of the step (a1) are both the method of dry-mixing or the mixing method for preparing the surface-treated inorganic filler (F_{T}) is the method of wet-mixing and the mixing method of the step (a1) is the method of dry-mixing from the standpoint of bonding of the unsaturated group-containing silane coupling agent (S) to the inorganic filler (F), that is, the chemical bonding the hydrolyzable silane coupling agent that is pre-treated to the inorganic filler (F) is proceeded and the unsaturated group-containing silane coupling agent (S) can be physically bonded thereto.

In the case where the unsaturated group-containing silane coupling agent (S) is added to the surface-treated inorganic filler (F_{T}) in this way, the unsaturated group-containing silane coupling agent (S) is present to surround the surface of the surface-treated inorganic filler (F_{T}), and a part or whole thereof may be absorbed into the surface-treated inorganic filler (F_{T}) or may be weakly chemically bonded to the surface of the surface-treated inorganic filler (F_{T}). This makes it possible to significantly suppress the volatilization of the silane coupling agent (S) during blending with a kneader or a Banbury mixer. In addition, it is considered that the unsaturated group of the unsaturated group-containing silane coupling agent (S) is reacted with the resin component (R) by the added organic peroxide (P) if desired. Further, it is considered that during molding, the unsaturated group-containing silane coupling agents (S) are condensed by the silanol condensation reaction catalyst (C).

In the step (a2), the mixture prepared in the step (a1) and the resin composition (RC) are melt-blended at a temperature equal to or higher than the decomposition temperature of the organic peroxide (P). Specifically, each of the mixture and the resin composition (RC) is added into the mixer and melt-blended while heating and the temperature thereof is raised to equal to or higher than the decomposition temperature of the organic peroxide (P). As the mixture and the resin composition (RC) are melt-blended in this manner, the silane master batch is produced.

In the step (a1) and the step (a2), the organic peroxide (P) may be mixed in the step (a1), in the step (a2) or in the step (a1) and the step (a2). The organic peroxide (P) is preferably mixed in the step (a1).

In the case of mixing the organic peroxide (P) in the step (a1), the organic peroxide (P) is preferably mixed in the surface-treated inorganic filler (F_{T}) together with the unsaturated group-containing silane coupling agent (S), but it may be mixed alone.

The content of the organic peroxide (P) in the step (a1) is appropriately determined in consideration of the content in the entire step (a), and it is, for example, from 0.05 to 0.6 part by mass, preferably from 0.05 to 0.4 part by mass and particularly preferably from 0.1 to 0.25 part by mass with respect to 100 parts by mass of the resin composition (RC). It is even more preferably from 0.1 to 0.3 part by mass. As described above, when the organic peroxide (P) is mixed in the step (a1), an effect is obtained that the organic peroxide is uniformly dispersed in the surface-treated inorganic filler (F_{T}), the grafting reaction uniformly proceeds, and thus the side reaction or aggregated substances of the crosslinked gel are less likely to occur.

In the case of mixing the organic peroxide (P) in the step (a2), the organic peroxide (P) may be mixed in the mixture prepared in the step (a1) together with the resin composition (RC), the resin component (R) or oil or may be mixed alone. It is preferable that the organic peroxide (P) is mixed together with the resin component (R). The content of the organic peroxide (P) in the step (a2) is appropriately determined in consideration of the content in the entire step (a), and it is set to zero or a part of the planned content.

In addition, in a case where the inorganic filler (F) contains inorganic fillers other than the surface-treated inorganic filler (F_{T}), for example, a surface-untreated inorganic filler (F_{U}), the surface-untreated inorganic filler (F_{U}) may be added after mixing the resin composition (RC), the unsaturated group-containing silane coupling agent (S) and the inorganic filler (F). In other words, the surface-untreated inorganic filler (F_{U}) may be mixed last of all in the step (a) and the step (a2). When the surface-untreated inorganic filler (F_{U}) is mixed last of all, it is possible to bond the unsaturated group-containing silane coupling agent (S) to the surface-treated inorganic filler (F_{T}).

As described above, the step (a) is carried out, and a silane master batch is prepared.

In the production method of the present invention, subsequently, the step (b) of obtaining a mixture by mixing the silane master batch and the silanol condensation reaction catalyst (C) is carried out.

The content of the silanol condensation reaction catalyst (C) is preferably 0.0001 to 0.5 parts by mass, and more preferably 0.001 to 0.1 parts by mass with respect to 100 parts by mass of the resin component (R). When the content of the silanol condensation reaction catalyst (C) is less than 0.0001 part by mass, it is apprehended that the crosslinking reaction by the condensation reaction of the unsaturated group-containing silane coupling agent (S) hardly proceeds, the heat resistance of the heat-resistant silane crosslinked resin molded body is not sufficiently improved, the productivity decreases, and the crosslinking reaction unevenly proceeds. On the other hand, when the content is more than 0.5 part by mass, it is apprehended that the silanol condensation reaction proceeds significantly fast, partial gelling occurs, and the appearance and resin properties of the heat-resistant silane crosslinked resin molded body deteriorate. In addition, the content of the silanol condensation reaction catalyst (C) in the catalyst master batch is appropriately set so that the content with respect to the resin component (R) is in the above range.

In the step (b), the silane master batch and the silanol condensation reaction catalyst are mixed. The mixing conditions in the step are appropriately selected depending on the method for mixing the silanol condensation reaction catalyst (C). In other words, in the case of mixing the silanol condensation reaction catalyst alone in the silane master batch, the mixing conditions are set to the melt-blending conditions of the resin component. On the other hand, in the case of mixing the silanol condensation reaction catalyst as a catalyst master batch, the silanol condensation reaction catalyst is melt-blended with the silane master batch. The melt-blending is basically the same as the step (a). The temperature of the melt-blending may be appropriately set according to the melting temperature of the carrier resin (E). The melt-blending may be performed at a blending temperature of preferably form 80 to 250°C and more preferably form 100 to 240°C. In addition, the blending condition such as a blending time may be appropriately set.

The step (b) may be a step of obtaining a mixture by mixing the silane master batch with the silanol condensation reaction catalyst (C), and these may be melt-blended. In the production method of the present invention, the step (b) is preferably a step of melt-blending the catalyst master batch containing the silanol condensation reaction catalyst (C) and the carrier resin (E) and the silane master batch.

The content of the carrier resin (E) in the catalyst master batch is preferably from 1 to 60 parts by mass, more preferably from 1 to 50 parts by mass and even more preferably from 1 to 40 parts by mass with respect to 100 parts by mass of the resin composition (RC) from the standpoint that it is possible to quickly promote the silane crosslinking reaction and the aggregated substances of the crosslinked gel are less likely to generate during molding. On the other hand, in the case of using a part of the resin component (R) as the carrier resin (E), for example, the resin composition (RC) is mixed in the step (a) of from 99 to 80 parts by mass and preferably from 98 to 94 parts by mass and in the step (b) of from 1 to 20 parts by mass and preferably from 2 to 6 parts by mass (100 parts by mass in total).

In addition, the content of the silanol condensation reaction catalyst (C) in the catalyst master batch is appropriately set so that the content thereof with respect to the resin composition (RC) is in the above range.

The blend of the silane master batch and the catalyst master batch is melt-blending while heating. The melt-blending is performed at the temperature to melt at least any one of a resin component (R) and organic peroxide (P), even though the melting point of the resin component (R) cannot be measured by DSC such as elastomer. The carrier resin (E) is preferably melted in order to disperse the silanol condensation reaction catalyst (C). In addition, the blending condition such as the blending time may be appropriately set.

As described above, the method for producing a heat-resistant silane crosslinkable resin composition of the present invention is carried out, and a heat-resistant silane crosslinkable resin composition is prepared. Hence, it is considered that a heat-resistant silane crosslinkable resin composition of the present invention is a composition obtained by carrying out the step (a) and the step (b) and a composite composition containing the resin component (R), the surface-treated inorganic filler (F_{T}) and the unsaturated group-containing silane coupling agent (S) as raw material components.

In the method for producing a heat-resistant silane crosslinked resin molded body of the present invention, subsequently, the step (c) and (d) are carried out. In other words, in the method for producing a heat-resistant silane crosslinked resin molded body of the present invention, the step (c) of obtaining a molded body by molding the mixture thus obtained, namely, the heat-resistant silane crosslinkable resin composition of the present invention is performed. The step (c) may not be carried out when preparing a heat-resistant silane crosslinkable resin composition and is carried out when preparing a heat-resistant silane crosslinked resin molded body. The step (c) may be a step by which a mixture can be mold, and the molding method is appropriately selected depending on the form of the heat-resistant product of the present invention. For example, extrusion molding or the like is selected in a case where the heat-resistant product of the present invention is an electric wire or an optical fiber cable. The step (c) can be carried out simultaneously with or sequentially to the step (b). For example, a continuous process can be employed in which the silane master batch and the catalyst master batch are melt-blended in a coating apparatus, subsequently for example, extruded so as to be coated on the electric wire or the fiber, and molded into a desired shape. This makes it possible to obtain a molded body of the heat-resistant silane crosslinkable resin composition of the present invention.

In the method for producing a heat-resistant resin composition of the present invention, subsequently, the step (d) of obtaining a heat-resistant silane crosslinked resin molded body by contacting the molded body thus obtained with water is carried out. The method of the step (d) itself may be performed by the general method. By contacting the molded material with water, the hydrolyzable silane coupling agents or the unsaturated group-containing silane coupling agents (S) are hydrolyzed, and the hydrolyzable silane coupling agents and/or the unsaturated group-containing silane coupling agents (S) are condensed to each other by the silanol condensation reaction catalyst (C) to form a crosslinking structure.

As the condition for contacting with water, the contacting step is proceeded only by being stored at room temperature, but in order to further promote the crosslinking reaction, it may be immersed in warm water, put in a wet heat tank, or exposed to the water vapor of a high temperature. In addition, at this time, the pressure may be applied to infiltrate water into the inside thereof.

As described above, the method for producing a heat-resistant silane crosslinked resin molded body of the present invention is carried out, and a heat-resistant silane crosslinked resin molded body is prepared from a heat-resistant silane crosslinkable resin composition of the present invention. Hence, it is considered that a heat-resistant silane crosslinked resin molded body of the present invention is a composition obtained by carrying out the steps (a), (b), (c), and (d) and a composite composition containing the resin component (R), the surface-treated inorganic filler (F_{T}) and the unsaturated group-containing silane coupling agent (S) as raw material components.

For the production method of the present invention, the detailed contents about the reaction mechanism are not clear yet, but it is considered as follows. When the resin component (R) is heated and blended, the resin component (R) is grafted by the unsaturated group-containing silane coupling agent (S) in the presence of the organic peroxide (P) and the surface-treated inorganic fillers (F_{T}) bond to each other via the unsaturated group-containing silane coupling agent (S) or bond to the resin component (R) via the unsaturated group-containing silane coupling agent (S) at the same time. At this time, when the surface-treated inorganic filler (F_{T}) of which the surface is treated with the fatty acid and/or the phosphoric acid ester in a specific amount and the unsaturated group-containing silane coupling agent (S) are blended in the resin component (R) in specific amounts, a bond is not formed between the part which is treated with the fatty acid and/or the phosphoric acid ester of the surface of the surface-treated inorganic filler (F_{T}) and the resin component (R) and thus the number of bonds between the resin and the filler decreases and the bond-structure is loosened. On the other hand, the unsaturated group-containing silane coupling agent (S) is hardly chemically bonded to the surface of the surface-treated inorganic filler (F_{T}) by a hydrolyzable bond but tends to be weakly bonded, and thus there are a large number of the unsaturated group-containing silane coupling agents (S) that are grafted, and it is possible to obtain a molded body which has a high crosslinking degree and contains a large amount of the surface-treated inorganic filler (F_{T}) without impairing the extrusion workability when molding. Hence, it is possible to exert heat resistance, flexibility and appearance in combination while securing excellent flame retardant properties.

In addition, the mechanism of the action of the process of the present invention is not clear yet, but it is considered as follows. It is possible to form the unsaturated group-containing silane coupling agent (S) which is linked to the surface-treated inorganic filler (F_{T}) by a strong bond and the unsaturated group-containing silane coupling agent (S) which is linked to the surface-treated inorganic filler (F_{T}) by a weak bond as well as to suppress the volatilization of the unsaturated group-containing silane coupling agent (S) when blending by further mixing the unsaturated group-containing silane coupling agent (S) with the surface-treated inorganic filler (F_{T}) of which the surface is previously treated with the fatty acid and/or the phosphoric acid ester in before and/or when blending with the resin component (R).

As described above, when the surface-treated inorganic filler (F_{T}) is blended together with the resin component (R) at a temperature equal to or higher than the melting point in the presence of the organic peroxide (P), the unsaturated group-containing silane coupling agent (S) can create a bond between the resin component (R) and the surface-treated inorganic filler (F_{T}) by the silane coupling agent which is strongly bonded to the filler (reaction k). On the other hand, the unsaturated group-containing silane coupling agent (S) which is weakly bonded to of the surface-treated inorganic filler (F_{T}) bonds with the resin component (R) by the grafting reaction (reaction m). The unsaturated group-containing silane coupling agent (S) which is grafted by such a (reaction m) is then mixed with the silanol condensation reaction catalyst (C) and undergoes the condensation reaction by coming in contact with water so as to form a crosslink (reaction n).

Here, the fatty acid and/or the phosphoric acid ester used for the surface treatment of the surface-treated inorganic filler (F_{T}) inhibit the linking of the unsaturated group-containing silane coupling agent (S) with the surface-treated inorganic filler (F_{T}) by a strong bond. As a result, there are relatively a large number of the unsaturated group-containing silane coupling agents (S) which are linked to the surface-treated inorganic filler (F_{T}) by a weak bond. In addition, it is possible to form a large number of bonding between the resin components (R) via the surface-treated inorganic filler (F_{T}) by the (reaction m) and the (reaction n) while it is possible to significantly suppress bonding between the surface-treated inorganic fillers (F_{T}) via the unsaturated group-containing silane coupling agent (S).

In other words, it is possible to exert heat resistance, flexibility and appearance in combination while securing excellent flame retardant properties as described above.

On the other hand, the unsaturated group-containing silane coupling agent (S) which is linked to the surface-treated inorganic filler (F_{T}) by a strong bond bonds the resin component (R) and the surface-treated inorganic filler (F_{T}) so as to impart a high mechanical strength, abrasion resistance and scratch resistance to the heat-resistant silane crosslinked resin molded body and the heat-resistant silane crosslinkable resin composition.

Hence, as in the present invention, it is possible to adjust the content of the unsaturated group-containing silane coupling agent (S) which is linked to the surface-treated inorganic filler (F_{T}) by a strong bond and the content of the unsaturated group-containing silane coupling agent (S) which is linked to the surface-treated inorganic filler (F_{T}) by a weak bond in balance by setting the amount of the fatty acid and/or the phosphoric acid ester used for surface treatment and the amount of the hydrolyzable silane coupling agent used for surface treatment together with the fatty acid and/or the phosphoric acid ester in specific ranges. As described above, it is possible to impart excellent flexibility, elongation properties and appearance in addition to high heat resistance to the heat-resistant silane crosslinked resin molded body and the heat-resistant silane crosslinkable resin composition as these (reaction k) and (reaction m) proceed in well-balanced cooperation with each other by adjusting both the amount of the fatty acid and/or the phosphoric acid ester which is surface-treating the inorganic filler (F_{T}) and the content of the unsaturated group-containing silane coupling agent (S) to specific ranges. In addition, the inorganic filler (F) is stable even when being stored for a long period of time and thus can contribute to the exertion of stable properties of the heat-resistant silane crosslinked resin molded body and the heat-resistant silane crosslinkable resin composition.

On the other hand, when the surface of the surface-untreated inorganic filler (F_{U}) is treated with the fatty acid and/or the phosphoric acid ester at more than 4.0% by mass, there are more unsaturated group-containing silane coupling agents (S) which are weakly bonded to the surface-treated inorganic filler (F_{T}) than required. Hence, when the surface of the surface-untreated inorganic filler (F_{U}) is treated with a too much amount of the hydrolyzable silane coupling agent, the unsaturated group-containing silane coupling agent (S) is volatilized to decrease the crosslinking degree and mechanical strength of the heat-resistant silane crosslinked resin molded body.

The production method of the present invention is applicable to the manufacture of a heat resistance required product (including a semi-finished product, a part and a member), a strength required product, a short-term heat resistance required product and a product such as a rubber material. Examples of such a product may include an electric wire such as a heat-resistant flame-retardant insulated wire, a heat-resistant flame-retardant cable coating material, a rubber alternative wire and cable material, other heat-resistant flame-retardant wire parts, a flame-retardant heat-resistant sheet and a flame-retardant heat-resistant film. In addition, a power supply plug, a connector, packing, a cushion material, a seismic isolating material, a box, a tape base material, a tube, a sheet, a wiring material used in the internal and external wiring for electric and electronic instruments, an electric wire insulator and a sheath are exemplified. The production method of the present invention is particularly applied to the manufacture of an electric wire and an optical cable and can form the coating of these.

In the case of applying the production method of the present invention to the manufacture of an electric wire and an optical cable, it is possible to mold the heat-resistant silane crosslinkable resin composition of the present invention into a desired shape by coating a conductor while melt-blending in the extrusion coating apparatus. These molded articles may be produced by extrusion-coating the high heat-resistant crosslinking composition that is not melted at a high temperature and contains the inorganic fillers in a large amount around the conductor or around the conductor that is prepared by attaching tensile strength fiber in a length or entwisting, using the extrusion coating device that is widely used, not using a specific instrument such as an electron beam crosslinking instrument. For example, as a conductor, any one such as single-conductor or twisted-conductor of a soft copper may be used. In addition, as a conductor, in addition to a naked conductor, the tin-coated conductor or the conductor having an enamel-coated insulating layer may be used. The thickness of the insulating layer (a coating layer formed of the heat-resistant silane crosslinked resin molded body obtained by the method for producing a heat-resistant product using a heat-resistant silane crosslinked resin molded body of the present invention) formed around the conductor is not particularly limited, and generally about from 0.15 to 8 mm.

### EXAMPLES

The present invention is described in more detail based on examples given below, but the present invention is not limited by the following examples. In addition, in Table 1 to Table 3, if not otherwise specified, the numerical values of the respective Examples and Comparative Examples represent a part by mass.

Examples 1 to 29 and Comparative Examples 1 to 7 were respectively prepared by changing each of the compounding using each of the ingredients in Table 1 to Table 3.

**{Table.1}**

| Table. 1 | | | | | | |
|---|---|---|---|---|---|---|
| | | Treatment amount (wt%) with respect to the filler (F_{T}) | | | | |
| | Kind of the filler | Stearic acid | Behenic acid | Oleic acid | Phosphoric acid ester | KBM 1003 |
| Surface-treated inorganic filler (F_{T}) 1 | magnesium hydroxide | 0.5 | - | - | - | - |
| Surface-treated inorganic filler (F_{T}) 2 | magnesium hydroxide | - | 0.5 | | - | - |
| Surface-treated inorganic filler (F_{T}) 3 | magnesium hydroxide | - | - | 0.5 | - | - |
| Surface-treated inorganic filler (F_{T}) 4 | magnesium hydroxide | - | - | - | 1.3 | - |
| Surface-treated inorganic filler (F_{T}) 5 | magnesium hydroxide | 1.5 | - | - | - | - |
| Surface-treated inorganic filler (F_{T}) 6 | magnesium hydroxide | 2.5 | - | - | - | - |
| Surface-treated inorganic filler (F_{T}) 7 | magnesium hydroxide | - | - | - | 2.8 | - |
| Surface-treated inorganic filler (F_{T}) 8 | magnesium hydroxide | - | - | - | 1 | 0.5 |
| Surface-treated inorganic filler (F_{T}) 9 | magnesium hydroxide | 2 | - | - | - | |
| Surface-treated inorganic filler (F_{T}) 10 | magnesium hydroxide | 0.5 | - | - | - | |
| Surface-treated inorganic filler (F_{T}) 11 | magnesium hydroxide | 0.5 | - | - | - | |
| Surface-treated inorganic filler (F_{T}) 12 | magnesium hydroxide | 2.5 | - | - | - | |
| Surface-treated inorganic filler (F_{T}) 13 | magnesium hydroxide | - | - | - | - | 0.3 |
| Surface-treated inorganic filler (F_{T}) 14 | magnesium hydroxide | 0.5 | - | - | - | - |
| Surface-treated inorganic filler (F_{T}) 15 | magnesium hydroxide | - | - | - | 1.3 | - |
| Surface-treated inorganic filler (F_{T}) 16 | magnesium hydroxide | 0.5 | - | - | - | - |
| Surface-treated inorganic filler (F_{T}) 17 | magnesium hydroxide | 0.5 | - | - | - | - |
| Surface-treated inorganic filler (F_{T}) 18 | calcium carbonate | 1 | - | - | - | - |
| Surface-treated inorganic filler (F_{T}) 19 | calcium carbonate | 1 | - | - | - | - |
| Surface-treated inorganic filler (F_{T}) 20 | magnesium hydroxide | 0.5 | - | - | 1.3 | - |
| Surface-treated inorganic filler (F_{T}) 21 | magnesium hydroxide | 0.5 | - | - | - | - |
| Surface-treated inorganic filler (F_{T}) 22 | magnesium hydroxide | 0.5 | - | - | - | 0.3 |
| Surface-treated inorganic filler (F_{T}) 23 | magnesium hydroxide 67% | 0.5 | - | - | - | - |
| | calcium carbonate 33% | - | - | - | - | - |
| Surface-treated inorganic filler (F_{T}) 24 | magnesium hydroxide | 0.5 | - | - | - | - |
| Surface-treated inorganic filler (F_{T}) 25 | magnesium hydroxide | 0.5 | - | - | - | - |
| Surface-treated inorganic filler (F_{T}) 26 | magnesium hydroxide | 0.5 | - | - | - | - |
| Surface-treated inorganic filler (F_{T}) 27 | magnesium hydroxide | - | - | - | - | 0.5 |
| Surface-untreated inorganic filler (F_{U}) 1 | magnesium hydroxide | - | - | - | - | - |

{Table 2}

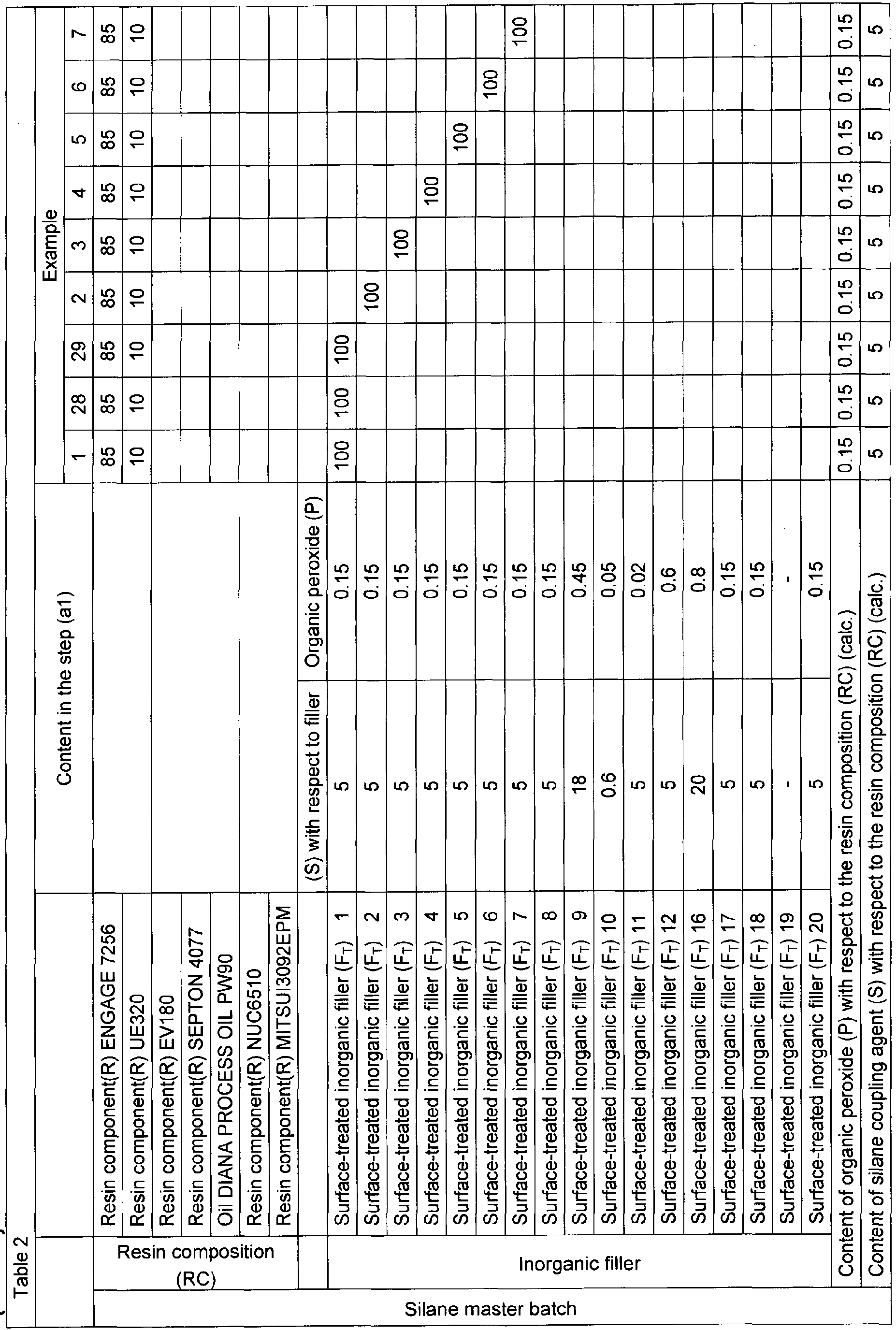

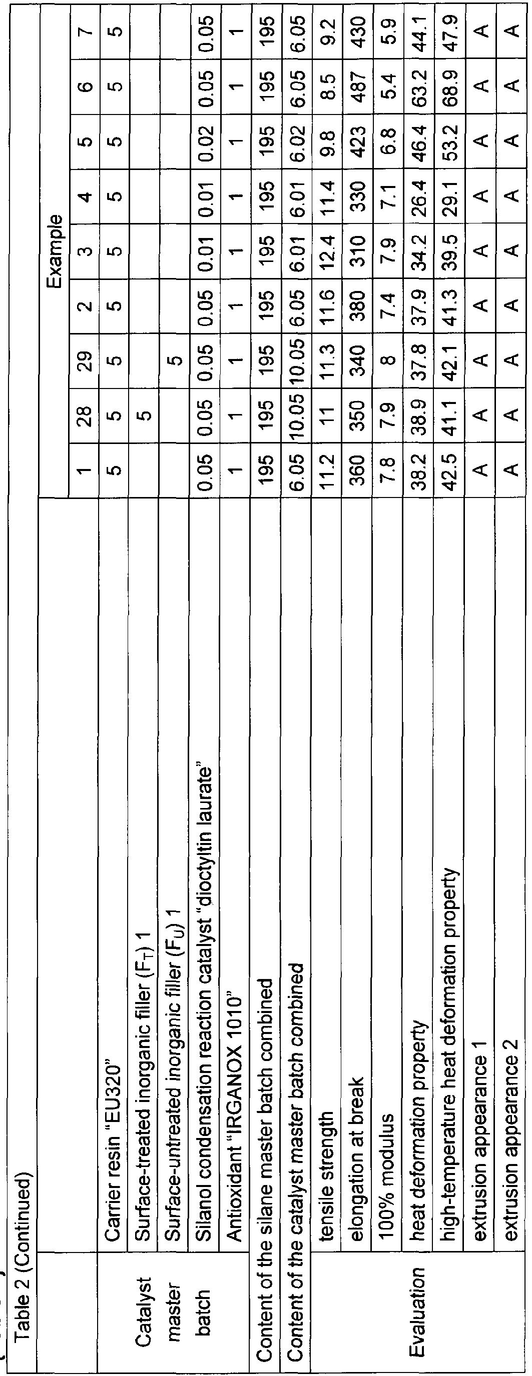

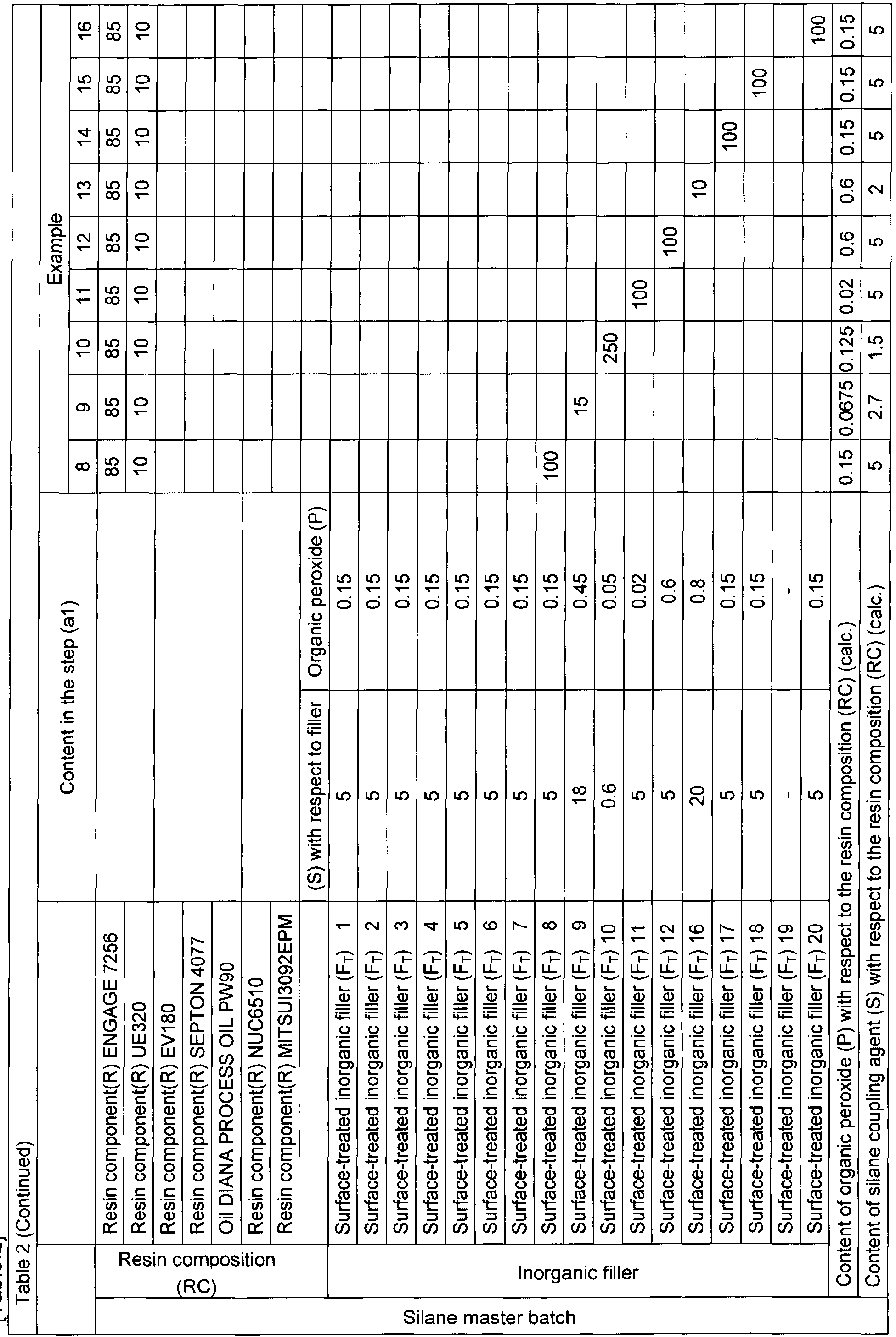

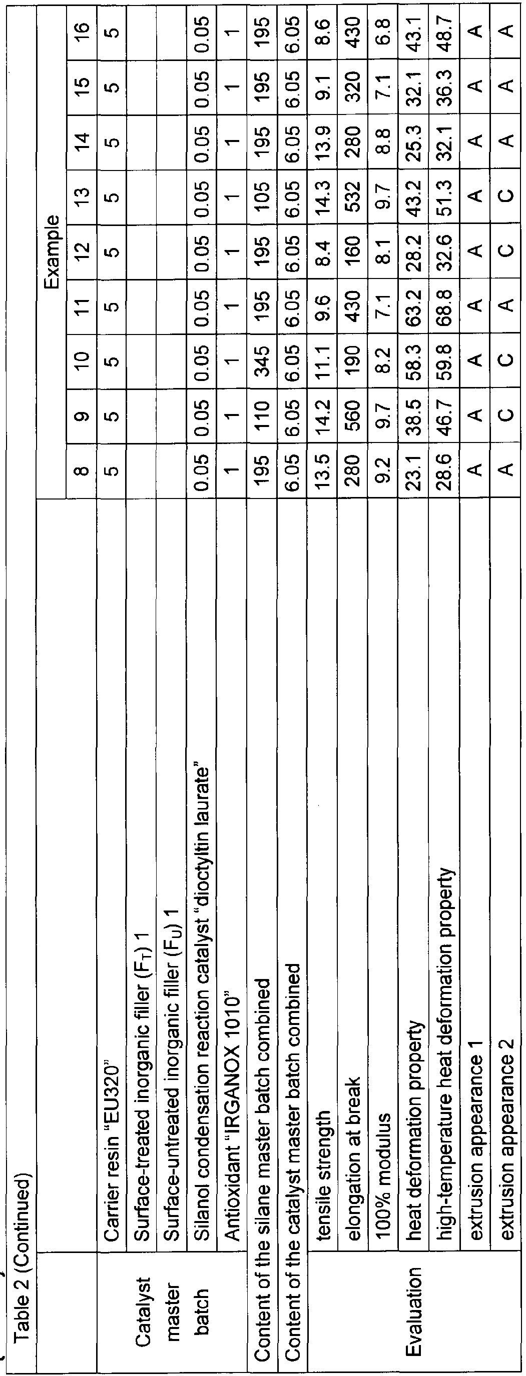

{Table 3}

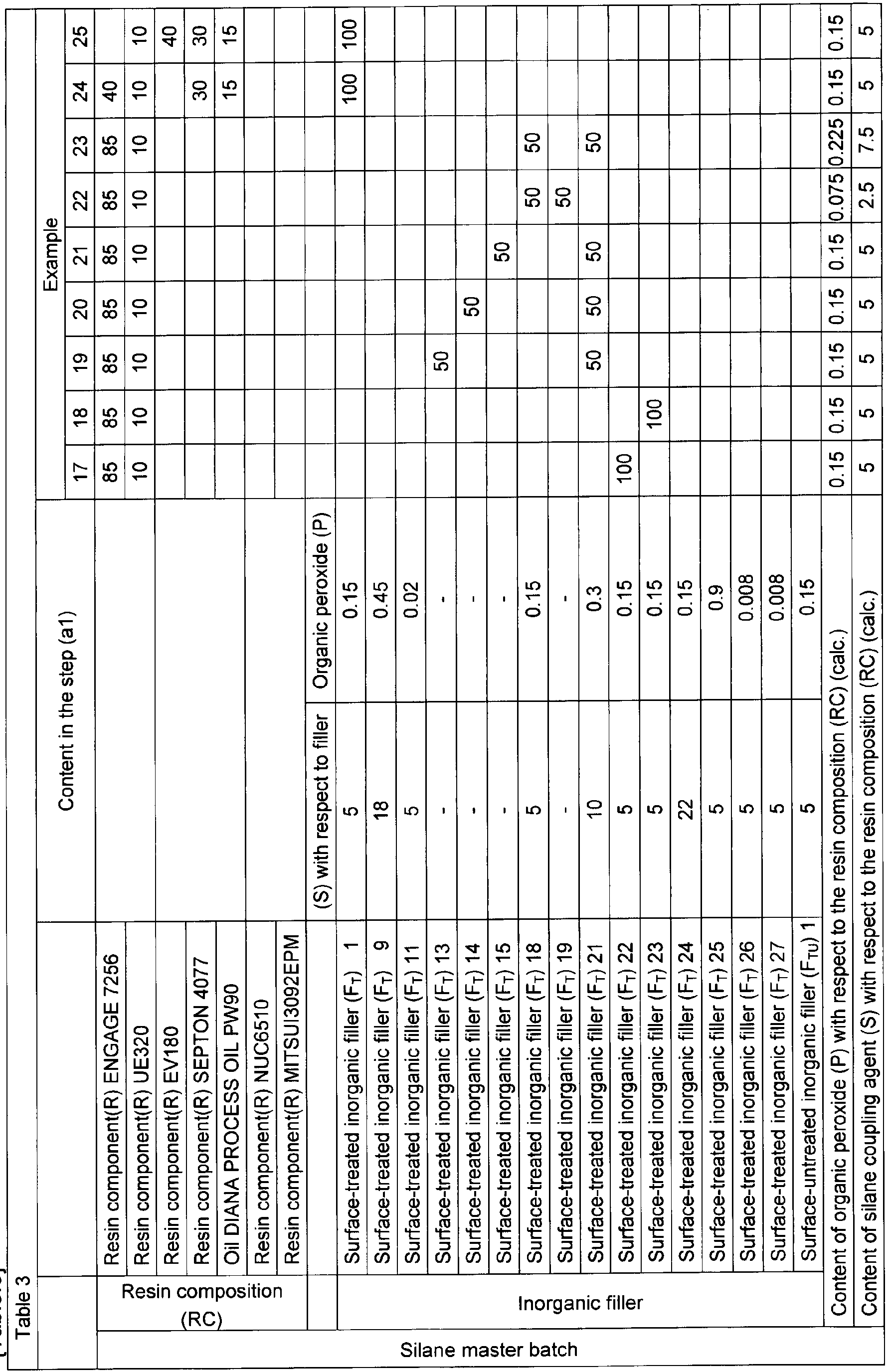

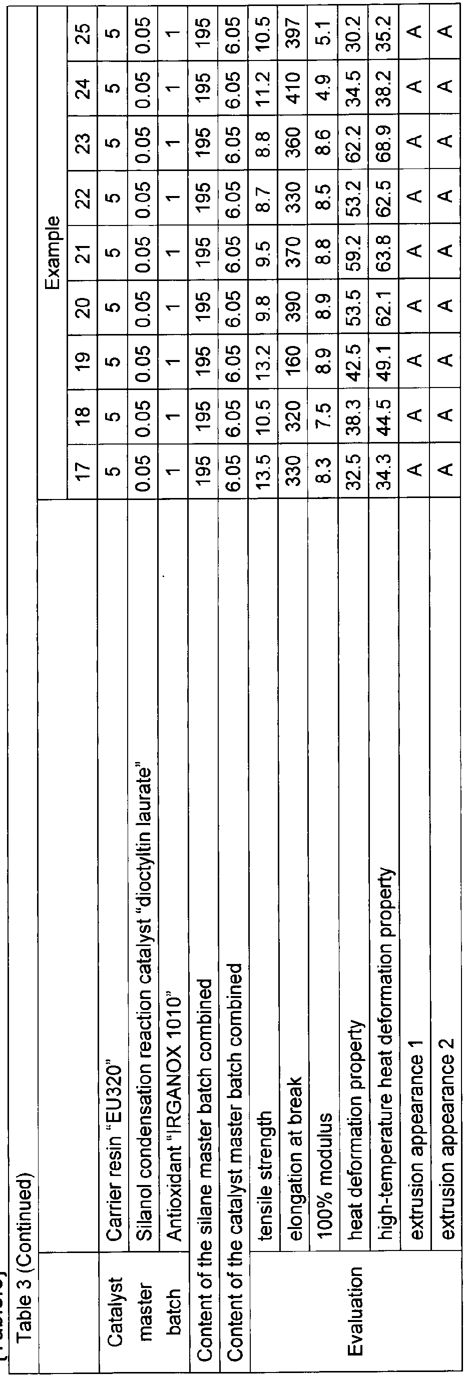

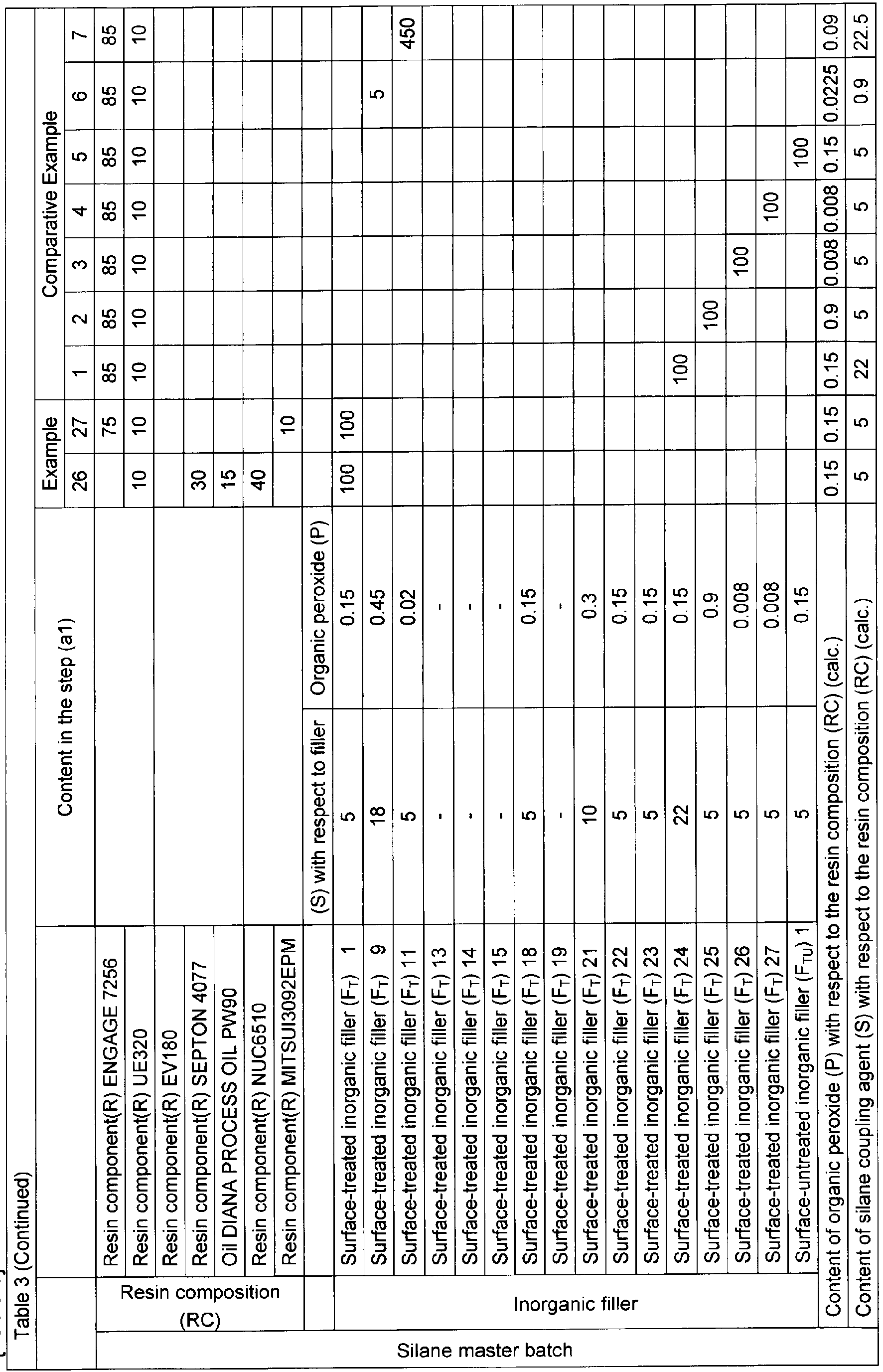

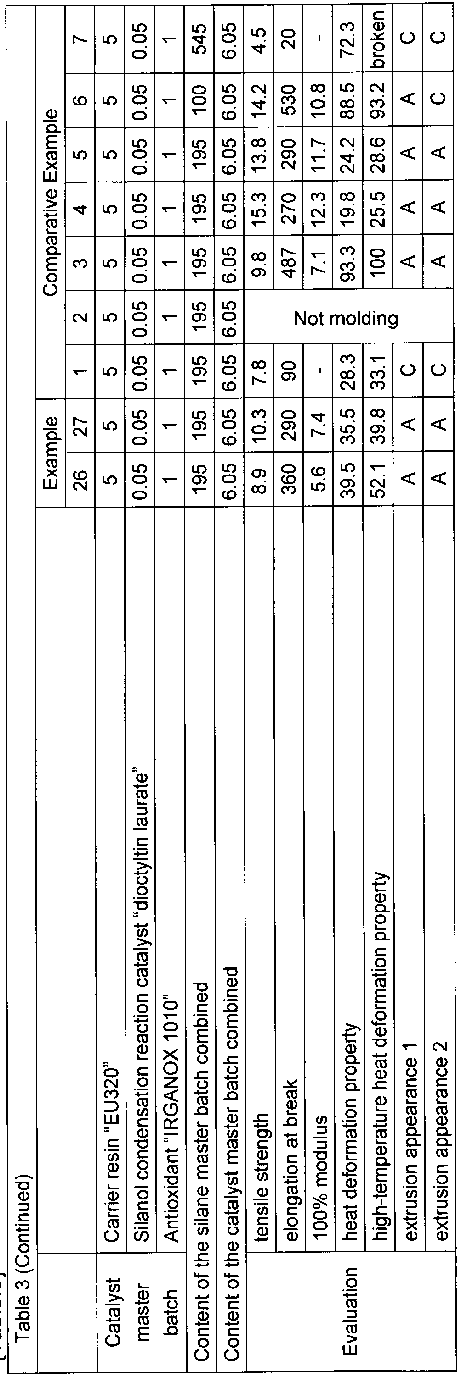

The compound described below was used as each compound shown in Table.1 to Table.3.

As the resin component (R) of the resin composition (RC), the compound described below was used.
"ENGAGE 7256" : linear low-density polyethylene, manufactured by Dow Chemical Japan Ltd.
"UE320": NOVATEC PE (trade name, linear low-density polyethylene), manufactured by Japan Polyethylene Corporation
"EV180": ethylene-vinyl acetates copolymer (the content of VA: 33 wt%), manufactured by DUPONT-MITSUI POLYCHEMICALS Co., Ltd.,
"SEPTON 4077": styrene-based elastomers (the content of styrene: 40%), manufactured by Kuraray Co., Ltd.,
"DIANA PROCESS OIL PW-90": paraffin series oil, manufactured by IDEMITSU KOSAN Co., Ltd.,
"NUC6510": ethylene-ethyl acrylate resin (the content of EA: 22 wt%), manufactured by Dow Chemical Company
"MITSUI 3092EPM": ethylene-buthylene-diene (trade name, ethylene-propylene-diene rubber, the content of ethylene: 66wt%), manufactured by Mitsui Chemicals, Inc.,

As the inorganic filler (F), the "surface-treated inorganic fillers (F_{T}) 1 to 27" and the "surface-untreated inorganic filler (F_{U}) 1" shown in Table 1 were prepared.

The "surface-treated inorganic fillers (F_{T}) 1 to 27" are prepared by subjecting the metal hydrate shown in the "kind of filler" in Table. 1 to the previous surface treatment with at least one kind of stearic acid, behenic acid (also referred to as behenic acid), oleic acid, a phosphoric acid ester (compound name: stearylphosphoric acid ester (trade name, manufactured by NOF CORPORATION)) and vinyltrimethoxysilane (KBM1003 (trade name, manufactured by Shin-Etsu Chemical Co., Ltd.)) in the "Treatment amount (wt%) with respect to the filler (F_{T})" shown in Table. 1.

In addition, the surface-treated inorganic filler (F_{T}) 23 is a mixture of 67% by mass of magnesium hydroxide subjected to the previous surface treatment with 0.5% by mass of stearic acid and 33% by mass of surface-untreated calcium carbonate.

As the unsaturated group-containing silane coupling agent (S), "KBM1003": (trade name, vinyltrimethoxysilane, manufactured by Shin-Etsu Chemical Co., Ltd.) was used.

AS the organic peroxide (P), "DCP" (trade name, manufactured by Nippon Kayaku Co., Ltd., dicumyl peroxide (decomposition temperature 151°C) was used.

As the silanol condensation reaction catalyst (C), dioctyltin laurate ("ADKSTAB OT-1" (trade name), manufactured by ADEKA CORPORATION) was used.

As the carrier resin (E), a part (5 parts by mass) of "UE320" as the resin component (R) was used.

As the antioxidant (hindered phenol antioxidant), "IRGANOX 1010" (trade name, manufactured by NAGASE & CO., LTD., pentaerythritol tetrakis [3-(3,5-di-tert-butyl-4-hydroxyphenyl)propionate]) was used.

In Examples and Comparative Examples, 5 parts by mass of the resin component (R) of 100 parts by mass of the resin composition (RC) was used as the carrier resin (E) of the catalyst master batch. In other words, the resin composition (RC) becomes 100 parts by mass as the step (a) and the step (b) are carried out.

First, the surface-treated inorganic filler (F_{T}) and the unsaturated group-containing silane coupling agent (S) "KBM1003" were introduced into and mixed in a 10 L ribbon blender manufactured by TOYO SEIKI KOGYO CO., LTD. in the parts by mass shown in Table 1 and the "content of (S) with respect to filler" (% by mass) of the section for the "content in step (a1)" shown in Table 2 and Table 3 with respect to 100 parts by mass of the surface-treated inorganic filler (F_{T}), respectively, subsequently, the organic peroxide (P) was introduced into the closed type ribbon blender in the content (parts by mass) shown in the "Organic peroxide (P)" of the section for the "content in step (a1)" shown in Table 2 and Table 3 with respect to 100 parts by mass of the surface-treated inorganic filler (F_{T}) at a temperature that is equal to or lower than the decomposition temperature of the organic peroxide (P), specifically room temperature and mixed together for 10 minutes at room temperature to obtain a mixture (step (a1)).

In addition, for Examples 19 to 23, the mixture obtained by mixing the each of the inorganic fillers (F) with the unsaturated group-containing silane coupling agent (S) and the organic peroxide (P) with the Henschel mixer was mixed with a Banbury mixer at room temperature to obtain a mixture. In all of Examples 19 to 21, the amount of the unsaturated group-containing silane coupling agent (S) with respect to the resin composition (RC) is substantially 5% by mass. The amount is 2.5% by mass in Example 22 and 7.5% by mass in Example 23.

Next, the mixture thus obtained which had the parts by mass shown in Table 2 and Table 3 and 95 parts by mass of the resin composition (RC) shown in Table 2 and Table 3 were introduced into the 2 L Banbury mixer manufactured by Nippon Roll MFG. Co., Ltd., melt-blended at a temperature of from 180 to 190°C for about 12 minutes in the mixer and discharged at a material discharge temperature of from 180 to 190°C to obtain a silane master batch (step (a2)). The mass of the silane master batch thus obtained is consistent with the content of silane master batch in Table 2 and Table 3.

The calculated value obtained by converting the content of the organic peroxide (P) mixed in the step (a1) to the content with respect to 100 parts by mass of the resin composition (RC) is shown in the section for the "content of organic peroxide (P) with respect to resin composition (RC) (calc.)" (calculated value) in Table 2 and Table 3.

In the silane master batch thus obtained, it has been confirmed that the approximately entire amount of the unsaturated group-containing silane coupling agent (S) is grafted onto the resin component (R) by the decomposition of the organic peroxide (P).

Subsequently, 5 parts by mass of the carrier resin (E) "UE320", the silanol condensation reaction catalyst (C) "dioctyltin dilaurate" and the antioxidant "Irganox 1010" were melt-blended at the mixing proportions shown in Table 2 and Table 3 at the temperature of from 180 to 190°C with a Banbury mixer and discharged at a material discharge temperature of from 180 to 190°C to obtain a catalyst master batch.

In Examples 28 and 29, the catalyst master batch was prepared by adding the "surface-treated inorganic filler (F_{T}) 1" or the "surface-untreated inorganic filler (F_{U}) 1" at the content shown in Table 2.

Subsequently, the silane master batch and the catalyst master batch were melt-blended in the parts by mass shown in Table 2 and Table 3, namely, the content in which the resin component (R) of the silane master batch was 95 parts by mass and the carrier resin (E) of the catalyst master batch was 5 parts by mass (resin composition (RC) was 100 parts by mass in total) at 180°C with a Banbury mixer (step (b)). The heat-resistant silane crosslinkable resin composition was prepared in this manner. In addition, the "content of the silane master batch combined" and the "content of the catalyst master batch combined" are shown in Table 2 and Table 3.

Subsequently, the heat-resistant silane crosslinkable resin composition was introduced into a 40 mm extruder (a compression part screw temperature of 190°C and a head temperature of 200°C) of UD = 24, and then coated on the outside of a 1/0.8 TA conductor in a thickness of 1 mm to obtain an electric wire having an outside diameter of 2.8 mm (step (c)). Since then, the electric wire was left in the atmosphere of a temperature of 80°C and a humidity of 95% for 24 hours (step (d)). As described above, the electric wire having the coating of the heat-resistant silane crosslinked resin molded body was manufactured.

The electric wires thus manufactured were subjected to the following evaluation, and the results thereof are shown in Table 2 and Table 3.

### <tensile properties>

The tensile properties of the electric wire were evaluated. The tensile test was conducted at a gauge interval of 25 mm and a tensile velocity of 500 mm/min based on UL1581, and the elongation at break (%), the tensile strength (unit: MPa) and the 100% modulus (unit: MPa) were measured. In addition, the elongation at break is intended to evaluate the elongation properties and 100% or more is a pass and 8 (MPa) or more is a pass for the tensile strength. The 100% modulus is intended to evaluate the flexibility and 10 (MPa) or less is a pass since it is flexible. The 100% modulus is one of the indicators to evaluate flexibility, and it can be said that it is excellent in flexibility when the 100% modulus is 8 (MPa) or less, and it is significantly excellent in flexibility when the 100% modulus is 7 (MPa) or less.

### <reinforcing property(heat deformation property)>

The reinforcing property as the property that the electric wire is hardly deformed even when being heated was evaluated by the heat deformation test. The heat deformation test (%) was conducted at the measurement temperature of 121°C and a load of 5 N based on UL1581. In the heat deformation test, 70% or less is a pass but 50% or less is more preferable.

### <heat-resistant (high-temperature heat deformation property)>

As the heat-resistant of the electric wire, the heat deformation test was evaluated. The heat deformation test (%) was conducted at the measurement temperature of 180°C and a load of 5 N based on UL1581. In the heat deformation test, 70% or less is a pass but 50% or less is more preferable.

### <The extrusion appearance properties of the electric wire>

As the extrusion appearance properties of the electric wire, the extrusion appearance test as was performed. As the extrusion appearance 1, the extrusion appearance was observed when manufacturing the electric wire. In addition, in the case where it was manufactured in a linear velocity of 10m using a 25mm extruder, when the appearance was favorable, it was defined as "A"; when it was slightly bad, it was defined as "B"; and when it was significantly bad, it was defined as "C." "B" or higher is a pass as the product level.

As the extrusion appearance 2, the extrusion appearance was observed when manufacturing the electric wire. To give a concrete example, in the case where it was manufactured in a linear velocity of 80m using a 65mm extruder, when the appearance was favorable, it was defined as "A"; when it was slightly bad, it was defined as "B"; and when it was significantly bad, it was defined as "C." "B" or higher is a pass as the product level, but it is not required to necessarily pass the present test since the extrusion appearance 2 is a severe test in which the linear velocity is increased up to eight times for the purpose of improving productivity.

As can be seen from the results in Table 2 and Table 3, in Examples 1 to 29, all of the tensile properties, particularly the elongation at break and the 100% modulus, the heat deformation test and the extrusion appearance can be compatible with one another. In other words, the heat-resistant silane crosslinked resin molded body of the present invention provided as the coating of the electric wire of Examples 1 to 29 is found to be excellent in all of flexibility, heat resistance, elongation properties and appearance. In addition, heat resistance can be easily understood to be excellent from the content of the inorganic filler (F).

On the other hand, in Comparative Examples 1 to 7, any of the tensile properties, the heat deformation test and the 100% modulus is deteriorated and these cannot be compatible with one another.

Having described our invention as related to the present embodiments, it is our intention that the invention not be limited by any of the details of the description, unless otherwise specified, but rather be construed broadly within its spirit and scope as set out in the accompanying claims.

This non-provisional application claims priority on Patent Application No. 2012-263751 filed in Japan on November 30, 2012, which is entirely herein incorporated by reference.

## Claims

1. A method for producing a heat-resistant silane crosslinked resin molded body, comprising:
(a) a step of preparing a silane master batch by melt-blending to 100 parts by mass of a resin composition (RC) containing a resin component (R); an organic peroxide (P) of from 0.01 to 0.6 parts by mass; an inorganic filler (F), containing a surface-treated inorganic filler (F_{T}) obtained by surface-treating a surface-untreated inorganic filler (F_{U}) with at least one kind of a fatty acid and a phosphoric acid ester of from 0.1 to 4.0% by mass with respect to the surface-untreated inorganic filler (F_{U}), of from 10 to 400 parts by mass; and an unsaturated group-containing silane coupling agent (S) of from 0.5 to 18.0 parts by mass with respect to 100 parts by mass of the surface-treated inorganic filler (F_{T}), at a temperature equal to or higher than the decomposition temperature of the organic peroxide (P);
(b) a step of obtaining a mixture by mixing the silane master batch and a silanol condensation reaction catalyst (C);
(c) a step of obtaining a molded body by molding the mixture; and
(d) a step of obtaining a heat-resistant silane crosslinked resin molded body by contacting the molded body with water.

2. The method for producing a heat-resistant silane crosslinked resin molded body according to Claim 1, wherein the surface-treated inorganic filler (F_{T}) is obtained by surface-treating with at least one kind of the fatty acid and the phosphoric acid ester of from 0.1 to 4.0% by mass and a hydrolyzable silane coupling agent of from 0.05 to 1.0% by mass.

3. The method for producing a heat-resistant silane crosslinked resin molded body according to Claim 1 or 2, wherein the surface-treated inorganic filler (F_{T}) is obtained by surface-treating with the fatty acid of from 0.1 to 1.5% by mass with respect to the surface-untreated inorganic filler (F_{U}).

4. The method for producing a heat-resistant silane crosslinked resin molded body according to any one of Claims 1 to 3, wherein the surface-treated inorganic filler (F_{T}) is obtained by surface-treating with the phosphoric acid ester of from 0.1 to 2.8% by mass with respect to the surface-untreated inorganic filler (Fu).

5. The method for producing a heat-resistant silane crosslinked resin molded body according to any one of Claims 2 to 4, wherein the hydrolyzable silane coupling agent is an unsaturated group-containing silane coupling agent (S).

6. The method for producing a heat-resistant silane crosslinked resin molded body according to any one of Claims 1 to 5, wherein the inorganic filler (F) contains a surface-untreated inorganic filler (F_{U}) that is not surface-treated.

7. The method for producing a heat-resistant silane crosslinked resin molded body according to any one of Claims 1 to 6, wherein the inorganic filler (F) contains the surface-treated inorganic filler (F_{T}) of from 30 to 100% by mass with respect to the entire mass thereof.

8. The method for producing a heat-resistant silane crosslinked resin molded body according to any one of Claims 1 to 7, wherein the surface-untreated inorganic filler (F_{U}) of the surface-treated inorganic filler (F_{T}) contains at least one kind of metal hydrate.

9. The method for producing a heat-resistant silane crosslinked resin molded body according to Claim 8, wherein the metal hydrate contains magnesium hydroxide.

10. The method for producing a heat-resistant silane crosslinked resin molded body according to Claim 8, wherein the metal hydrate contains calcium carbonate.

11. The method for producing a heat-resistant silane crosslinked resin molded body according to any one of Claims 1 to 10, wherein the resin component (R) is contained in the resin composition (RC) in an amount of from 20 to 100% by mass.

12. The method for producing a heat-resistant silane crosslinked resin molded body according to any one of Claims 1 to 11, wherein the step (a) comprising;
(a1) a step of preparing a mixture by mixing the inorganic filler (F) with the unsaturated group-containing silane coupling agent (S) and subsequently mixing the organic peroxide (P) therewith at a temperature equal to or lower than the decomposition temperature thereof, and
(a2) a step of preparing a silane master batch by melt-blending the mixture thus obtained and the resin composition (RC) at a temperature equal to or higher than the decomposition temperature of the organic peroxide (P).

13. The method for producing a heat-resistant silane crosslinked resin molded body according to any one of Claims 1 to 12, wherein the step (b) is a step of mixing the silane master batch with a catalyst master batch containing the silanol condensation reaction catalyst (C) and a carrier resin (E).

14. The method for producing a heat-resistant silane crosslinked resin molded body according to any one of Claims 1 to 13, wherein the step (a) is performed by melt-blending with a closed type mixer.

15. A method for producing a heat-resistant silane crosslinkable resin composition, comprising the step (a) and the step (b) but not comprising, at least, the step (c).

16. A heat-resistant silane crosslinkable resin composition produced by the method for producing a heat-resistant silane crosslinkable resin composition according to Claim 15.

17. A heat-resistant silane crosslinked resin molded body produced by the method for producing a heat-resistant silane crosslinked resin molded body according to any one of Claims 1 to 14.

18. A heat-resistant product having the heat-resistant silane crosslinked resin molded body according to Claim 17.

19. The heat-resistant product according to Claim 18, wherein the heat-resistant silane crosslinked resin molded body is provided as a coating for an electric wire or an optical fiber cable.
